# EUROPÄISCHE PATENTSCHRIFT

(11) **EP 1 140 956 B1**
(45) Veröffentlichungstag und Bekanntmachung des Hinweises auf die Patenterteilung: **28.08.2002**
(21) Anmeldenummer: 99958031.9
(22) Anmeldetag: 12.11.1999
(51) Int. Cl.: C07F 17/02, C07B 53/00, C07B 31/00

(54) **LIGANDEN UND KOMPLEXE ZUR ENANTIOSELEKTIVEN HYDRIERUNG**
LIGANDS AND COMPLEXES FOR ENANTIOSELECTIVE HYDROGENATION
LIGANDS ET COMPLEXES D'HYDROGENATION ENANTIOSELECTIVE

(30) Priorität: 19.12.1998 DE 19858865; 30.10.1999 DE 19952348
(43) Veröffentlichungstag der Anmeldung: 10.10.2001
(73) Patentinhaber: Degussa AG, 40474 Düsseldorf (DE)
(72) Erfinder: KNOCHEL, Paul, D-35037 Marburg (DE); IRELAND, Tanja, 13109, Simiane (FR); GROSSHEIMANN, Gabriele, 45257 Essen (DE); DRAUZ, Karlheinz, D-63579 Freigericht (DE); KLEMENT, Ingo, D-35415 Pohlheim-Garbenteich (DE)
(86) Internationale Anmeldenummer: EP9908736
(87) Internationale Veröffentlichungsnummer: WO00037478

(56) Entgegenhaltungen:
- WO-A-96/32400

## Beschreibung

Die vorliegende Erfindung betrifft neue Liganden und Komplexe für die homogene katalytische enantioselektive Hydrierung.

Insbesondere richtet sich die Erfindung auf Liganden der allgemeinen Formel (I)

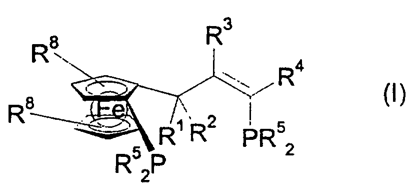

Ein weiterer Aspekt der Erfindung beschäftigt sich mit Komplexen der allgemeinen Formel (II), 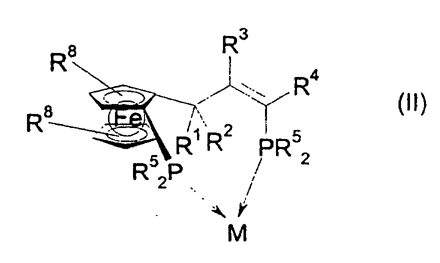 ein Verfahren zu deren Herstellung wie deren Verwendung.

Die enantioselektive Einführung von stereogenen Zentren in organische Moleküle durch homogen katalysierte Hydrierung ist für spezielle Anwendungen im industriellen Maßstab etabliert. Die enantioselektiven Produkte sind wertvolle Ausgangssubstanzen zur Herstellung bioaktiver Wirkstoffe.

Der Einsatz von Bisphosphinkatalysatoren für die enantioselektive homogene katalytische Hydrierung für den eben genannten Zweck ist wohl bekannt (Burk et al., Tetrahedron 1994, 4399).

Knochel et al. (Chem. Eur. J. 1998, 4, 950-968), Hayashi et al. (J. Chem. Soc., Chem. Commun. 1989, 495-496) und Ikeda et al. (Tetrahedron Lett. 1996, 4545-4448) beschreiben Pd-Komplexe mit *C*₂-symmetrische Ferrocenyl-(bis-tertiärphosphin)-Liganden. Allerdings wurden diese Komplexe lediglich bei asymmetrischen Allylierungen eingesetzt.

Demgegenüber berichten Yamamoto et al. (Bull. Chem. Soc. Jpn. 1980, 53, 1132-1137) über den Einsatz von nicht *C*₂symmetrischen Ferrocenyl-(bis-tertiär-phosphin)-Liganden in der enantioselektiven homogenen katalytischen Hydrierung. Mit diesen Liganden erhält man jedoch nur sehr vereinzelt gute Enantiomerenüberschüsse.

Aus WO 96/32400 und WO 95/21151 ist die prinzipielle Eignung nicht *C*₂-symmetrischer Ferrocenylliganden für die enantioselektive Hydrierung abzulesen.

Aufgabe der vorliegenden Erfindung ist deshalb die Angabe weiterer enantiomerenangereicherter Bisphosphinligandensysteme und -katalysatoren für die homogene enantioselektive katalytische Hydrierung von Mehrfachbindungen.

Unter Mehrfachbindungen werden im Rahmen der Erfindung Doppel-Bindungen zwischen einem Kohlenstoffatom und einem weiteren Kohlenstoffatom oder Sauerstoffatom oder Stickstoffatom verstanden.

Gelöst wird diese Aufgabe durch die Angabe von Liganden und Katalysatoren, welche Gegenstand der Ansprüche 1 und 3 sind. Vorteilhafte Ausgestaltungen erfindungsgemäßer Liganden und Katalysatoren sind in den Ansprüchen 2 und 4 dargestellt.

Ansprüche 5 bis 8 umfassen ein Verfahren zur Herstellung der Liganden und Komplexe, während Ansprüche 9 und 10 erfindungsgemäße Verwendungen unter Schutz stellen.

Dadurch, daß enantiomerenangereicherte Liganden und deren Salze der allgemeinen Formel (I) 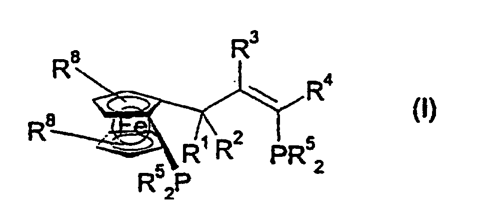 worin
R¹, R² unabhängig voneinander bedeuten R⁸, NR⁶R⁷, SR⁶, (C₁-C₁₈)-Alkyl, (C₁-C₁₈)-Alkoxy, (C₂-C₁₈)-Alkoxyalkyl, (C₁-C₁₈)-Acyloxy, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, (C₃-C₈)-Cycloalkyl-(C₁-C₈)-Alkyl,
oder R¹ und R² sind über einen (C₃-C₇)-Carbocyclus, welcher einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert sein und/oder im Ring Heteroatome wie N, O, P, S enthalten kann, verbunden,
R³, R⁴ unabhängig voneinander bedeuten H, (C₁-C₁₈)-Alkyl, (C₁-C₁₈)-Alkoxy, (C₂-C₁₈)-Alkoxyalkyl, (C₁-C₁₈)-Acyloxy, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl- (C₃-C₈)-Cycloalkyl, (C₃-C₈)-Cycloalkyl- (C₁-C₈)-Alkyl,
oder R³ und R⁴ sind über eine (C₃-C₅)-Brücke, welche eine oder mehrere Doppelbindungen enthalten und/oder einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert sein und/oder im Ring Heteroatome wie N, O, P, S enthalten kann, verbunden,
R⁵ bedeutet (C₁-C₁₈)-Alkyl, (C₆-C₁₈)-Aryl, (C₃-C₁₈)-Heteroaryl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, wobei die Reste R⁵ an demselben und/oder den beiden Phosphoratomen verschieden sein können,
R⁶, R⁷ unabhängig voneinander bedeuten H, (C₁-C₁₈)-Alkyl, (C₁-C₁₈)-Alkoxy, (C₂-C₁₈)-Alkoxyalkyl, (C₁-C₁₈)-Acyl, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, (C₃-C₈)-Cycloalkyl-(C₁-C₈)-Alkyl,
oder R⁶ und R⁷ Rind über einen (C₃-C₇)-Carbocyclus, welcher einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert sein und/oder im Ring Heteroatome wie N, O, P, S enthalten kann, verbunden,
R⁸ H oder einen Rest B-X-Z bedeutet, wobei B ein Rest der Gruppe CR⁹₂, NR⁹, O, S, SiR⁹₂ ist, X ein Spacer wie z. B. 1,4'-Biphenyl, 1-, 2-Ethylen, 1-, 3-Propylen, PEG-(2-10) ist und Z einen über eine funktionelle Gruppe, wie z. B. die O-, NH-, COO-, CONH, Ethenyl-, NHCONH-, OCONH- oder NHCOO-, an ein Polymer gebundenen Rest darstellt, oder die Reste R⁸ der beiden Cyclopentadienylringe sind über eine α,ω-(C₂-C₄)-Alkylenbrücke miteinander verbunden, R⁹ bedeutet H, (C₁-C₁₈)-Alkyl gelingt die der Erfindung zugrundeliegende Aufgabe in nicht vorhersehbarer Weise.

Insbesondere sind Liganden bevorzugt, bei denen R¹, R² unabhängig voneinander bedeuten H, NR⁶R⁷, (C₁-C₈)-Alkyl, (C₁-C₈)-Acyloxy, (C₆-C₈)-Aryl, (C₃-C₈)-Cycloalkyl,
oder R¹ und R² sind über einen (C₃-C₇)-Carbocyclus verbunden,
R³, R⁴ unabhängig voneinander bedeuten (C₁-C₈)-Alkyl, (C₆-C₁₈)-Aryl, (C₃-C₈)-Cycloalkyl,
oder R³ und R⁴ sind über eine (C₃-C₅)-Brücke, welche eine oder mehrere Doppelbindungen enthalten kann, verbunden,
R⁵ bedeutet (C₆-C₁₈)-Aryl, (C₃-C₈)-Cycloalkyl,
R⁶, R⁷ unabhängig voneinander bedeuten (C₁-C₁₈)-Alkyl, (C₁-C₁₈)-Acyl, (C₆-C₁₈)-Aryl, (C₃-C₈)-Cycloalkyl,
oder R⁶ und R⁷ sind über einen (C₃-C₇)-Carbocyclus verbunden,
R⁸ bedeutet H.

Ein weiterer Aspekt der Erfindung beschäftigt sich mit enantiomerenangereicherten Komplexen der allgemeinen Formel (II) und deren Salze 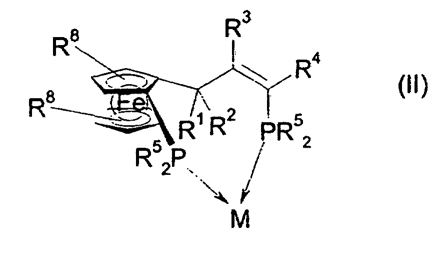 worin R¹ bis R⁹ die eingangs angegebene Definition einnehmen können und M ein Metallatom oder -ion der Nebengruppe 7 oder 8, wie z. B. Co, Ni, Rh, Ru, Ir, Pd, Re oder Pt ist.

Besonders bevorzugt sind wiederum Komplexe der Formel (II), bei denen R¹, R² unabhängig voneinander bedeuten H, NR⁶R⁷, (C₁-C₈)-Alkyl, (C₁-C₈)-Acyloxy, (C₆-C₈)-Aryl, (C₃-C₈)-Cycloalkyl,
oder R¹ und R² sind über einen (C₃-C₇)-Carbocyclus verbunden,
R³, R⁴ unabhängig voneinander bedeuten (C₁-C₈)-Alkyl, (C₆-C₁₈)-Aryl, (C₃-C₈) -Cycloalkyl,
oder R³ und R⁴ sind über eine (C₃-C₅)-Brücke, welche eine oder mehrere Doppelbindungen enthalten kann, verbunden,
R⁵ bedeutet (C₆-C₁₈)-Aryl, (C₃-C₈)-Cycloalkyl,
R⁶, R⁷ unabhängig voneinander bedeuten (C₁-C₁₈)-Alkyl, (C₁-C₁₈)-Acyl, (C₆-C₁₈)-Aryl, (C₃-C₈)-Cycloalkyl,
oder R⁶ und R⁷ sind über einen (C₃-C₇)-Carbocyclus verbunden,
R⁸ bedeutet H,
und M ein Metallatom oder -ion der Nebengruppe 8, wie z. B. Rh, Ru, Pd ist.

In einem nächsten Aspekt beschäftigt sich die Erfindung mit einem Verfahren zur Herstellung der erfindungsgemäßen Liganden.

Verbindungen der allgemeinen Formel (III) 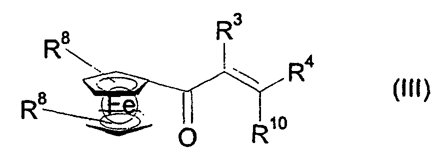 worin R³, R⁴ und R⁸ die oben angegebene Bedeutung annehmen können und R¹⁰ = Hal bedeutet, können enantioselektiv zu Verbindungen der allgemeinen Formel (IV) 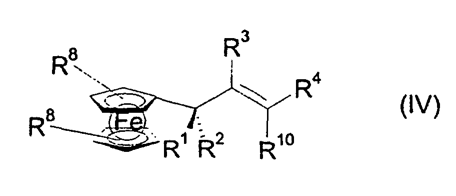 worin R¹, R² H oder OH sind, wobei R¹ und R² nicht gleich sein dürfen, R³, R⁴ und R⁸ die oben angegebene Bedeutung annehmen können und R¹⁰ = Hal bedeutet, umgesetzt werden.

Anschließend setzt man Verbindungen der allgemeinen Formel (IV) worin R¹, R² H oder OH sind, wobei R¹ und R² nicht gleich sein dürfen, R³, R⁴ und R⁸ die oben angegebene Bedeutung annehmen können und R¹⁰ = Hal bedeutet, zu Verbindungen der allgemeinen Formel (V) 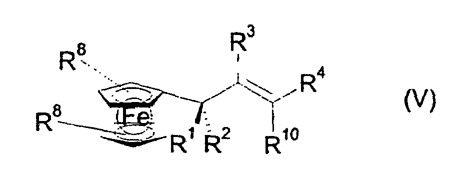 worin R¹, R² H oder N(C₁-C₈)-Alkyl₂ sind, wobei R¹ und R² nicht gleich sein dürfen, R³, R⁴ und R⁸ die oben angegebene Bedeutung annehmen können und R¹⁰ = Hal bedeutet, um.

In einem nächsten Schritt können Verbindungen der allgemeinen Formel (V) worin R¹, R² H oder N(C₁-C₈)-Alkyl₂ sind, wobei R¹ und R² nicht gleich sein dürfen, R³, R⁴ und R⁸ die oben angegebene Bedeutung annehmen können und R¹⁰ = Hai bedeutet, vorteilhaft in Verbindungen der allgemeinen Formel (VI) 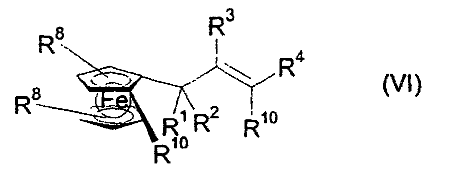 worin R¹, R² H oder N(C₁-C₈)-Alkyl₂ sind, wobei R¹ und R² nicht gleich sein dürfen, R³, R⁴ und R⁸ die oben angegebene Bedeutung annehmen können und R¹⁰ = Li bedeutet, überführt werden.

Abschließend kann man Verbindungen der allgemeinen Formel (VI) worin R¹, R² H oder N(C₁-C₈)-Alkyl₂ sind, wobei R¹ und R² nicht gleich sein dürfen, R³, R⁴ und R⁸ die oben angegebene Bedeutung annehmen können und R¹⁰ = Li bedeutet, in Verbindungen der allgemeinen Formel (I) 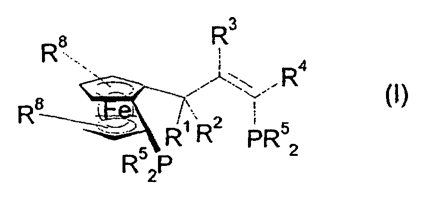 worin R¹ bis R⁹ die erfindungsgemäßen Bedeutungen annehmen können, umwandeln.

Die Herstellung der erfindungsgemäßen Ligandensysteme kann also modular erfolgen, wie in folgendem Schema beschrieben ist.

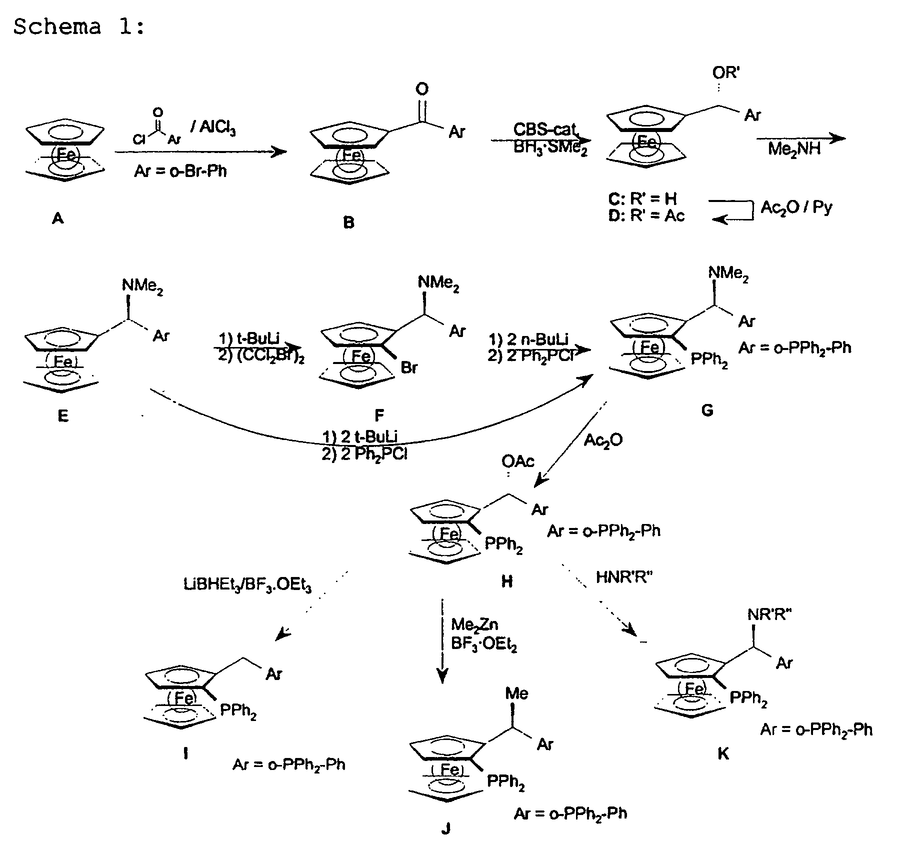

Im ersten Herstellungsschritt wird käuflich erhältliches Ferrocen **A** nach Friedel-Crafts-Bedingungen (J. Org. Chem. 1957, 22, 903-906) monoacyliert.

Zur gleichzeitigen Einführung einer bevorzugten zentralen und planaren Chiralität kann das acylierte Ferrocen **B** im Prinzip nach allen dem Fachmann für diese Reaktion in Frage kommenden Methoden umgesetzt werden (J. Am Chem. Soc. 1957, 79, 2742, J. Organomet. Chem. 1973, 52, 407-424). Bevorzugt ist allerdings die Reduktion mit dem sogenannten CBS-Reagenz (J. Am. Chem. Soc. 1987, 109, 5551-5553, Tetrahedron Lett. 1996, 37, 25-28). Durch diese Maßnahme ist gewährleistet, daß die Reduktionsprodukte in sehr guten Ausbeuten und mit einer sehr hohen optischen und diastereomeren Reinheit anfallen. Ein weiterer denkbarer Weg zur Herstellung gewünschter enantiomerenangereicherter Liganden kann beispielsweise darin gesehen werden, die acylierten Ferrocene mittels enantioselektiver reduktiver Aminierung herzustellen. Man gelangt so gleich zu den enantiomerenangereicherten Liganden mit einem Amin-Substituenten am stereogenen Zentrum.

Weitere Möglichkeiten zur Einführung der Chiralität werden prinzipiell in Tetrahedron Asymmetry 1991, 2, 601-612, J. Org. Chem. 1991, *56,* 1670-1672, J. Org. Chem. 1994, 59, 7908-7909, J. Chem. Soc., Chem. Commun. 1990, 888-889 beschrieben.

Die nach der oben beschriebenen CBS-Reaktion erhältlichen enantiomerenangereicherten Alkohole **C** können jetzt auf alle dem Fachmann gedanklich naheliegende Weisen in weitere Derivate der Formel **E** umgesetzt werden. Bevorzugt werden die Derivate hergestellt, bei denen die OH-Funktion am stereogenen Zentrum durch eine Aminogruppe ausgetauscht wird. Ganz besonders bevorzugt ist der Erhalt der Dialkylaminoderivate, da diese direkt für die weitere Umsetzung zu **F** oder über **G** zu **H** herangezogen werden können.

In diesem Schritt können vorteilhaft die Dialkylaminoderivate **F** in α-Stellung am Cyclopentadienylring deprotoniert und anschließend mit einem Reagenz zur Einführung eines Halogenatoms, vorzugsweise Brom, umgesetzt werden.

Die Deprotonierung kann mit allen dem Fachmann für diesen Zweck geläufigen Mitteln geschehen, bevorzugt ist jedoch der Einsatz der starken Base *n*-Butyllithium (*n*-BuLi) oder t-Butyllithium (t-BuLi) in einem inerten Lösungsmittel. Vorzugsweise wird das am Ferrocen befindliche Lithium mit (CCl_{z}Br)₂ in das Bromderivat umgewandelt. Durch die im Molekül vorhandene Chiralität bedingt, wird aus den zwei vorhandenen α-Positionen am Ring eine bevorzugt deprotoniert und substituiert.

Die anschließende Einführung der Phosphingruppe in α-Stellung am Ferrocenring und am Aromaten erfolgt vorteilhafterweise durch doppelten Halogen-Lithium-Austausch unter anschließender Umsetzung mit einem Phosphinreagenz. Als Phosphinreagenzien kommen solche Verbindungen bevorzugt in Frage, welche eine Abgangsgruppe am Phosphoratom tragen und damit elektrophilen Charakter zeigen. Solche Reagenzien sind dem Fachmann hinlänglich bekannt (J. Am. Chem. Soc. 1955, 77, 3526-29). Bevorzugt ist der Einsatz von Diphenylphosphinchlorid.

Die Einführung der Phosphingruppen kann auch schon ausgehend von dem Derivat **E** erfolgen. Durch Deprotonierung und Halogen-Lithium-Austausch mit zwei eq. Base erhält man äußerst bevorzugt zweifach lithiierte Intermediate, welche nach dem oben genannten Weg mit Phosphingruppen zu **G** umgesetzt werden können.

Falls der Rest R⁸ nicht von Anfang an im Startmolekül **A** vorhanden ist, kann man anschließend in einem weiteren wie eben beschriebenen Deprotonierungsexperiment die zweite zur Deprotonierung mögliche Position die δ-Position am Ferrocenring deprotonieren und anschließend zur Einführung eines Restes R⁸ mit einem geeigneten elektrophilen Reagenz umsetzen.

Der Rest R⁸ kann u. a. zur Anbindung der erfindungsgemäßen Komplexe an eine polymere Matrix wie z. B. ein lineares PMMA, Polystyrol oder PEG sowie ein nichtlineares Dendrimer benutzt werden.

Die Anbindung des Restes R⁸ an den Cyclopentadienylring des erfindungsgemäßen Komplexes ist bzgl. der freien Positionen am Ring und der Ringe überhaupt variabel. Mithin reicht die Einführung eines Restes R⁸. Als Reste können alle dem Fachmann für diesen Zweck in Frage kommenden Reste verwandt werden. Eine geeignete Übersicht zur molekularen Vergrößerung von Komplexkatalysatoren bietet (Tetrahedron Asymmetry 1998, *9*, 691-696). Bevorzugt besteht der Rest R⁸ aus der Anordnung B-X-Z, wobei B ein Rest der Gruppe CR⁹₂, NR⁹, O, S, SiR⁹₂, X ein Spacer, wie z. B. 1,4'-Biphenyl, 1-, 2-Ethylen, 1-, 3-Propylen, PEG-(2-10) und Z einen über eine funktionelle Gruppe, wie z. B. die O-, NH-, COO-, CONH, Ethenyl-, NHCONH-, OCONH- oder NHCOO-, an ein wie oben geschildertes Polymer gebundenen Rest darstellt. Alternativ können die Reste R⁸ der beiden Cyclopentadienylringe über eine α,ω-(C₂-C₄)-Alkylenbrücke miteinander verbunden sein.

Im Prinzip sind jetzt alle für die betrachtete Reaktion notwendigen Substituentengruppen im Molekül vorhanden. Das Ligandensystem kann jedoch nach dem Fachmann geläufigen Methoden im Rahmen des Anspruchsumfanges beliebig abgewandelt werden (z. B. in **I**, **J**, **K**).

Die erfindungsgemäßen Komplexe lassen sich aus den Liganden nach dem Fachmann bekannten Verfahren herstellen. Bevorzugt werden die Komplexe jedoch erst kurz vor ihrem Einsatz durch Zusammengeben der Liganden und Derivate bzw. Salze der Übergangsmetalle im Reaktionslösungsmittel erzeugt.

Gegenstand der Erfindung ist ebenfalls die Verwendung der erfindungsgemäßen Liganden in Katalysatoren zur homogenen enantioselektiven Hydrierung sowie die Verwendung der erfindungsgemäßen Komplexe zur katalytischen homogenen enantioselektiven Hydrierung.

Für die Liganden 8a-c wurden die in Tabelle 1 dargestellten Umsetzungen durchgeführt. Die erzielten Ergebnisse und die Reaktionsbedingungen sind in Tabelle 1 dargestellt.

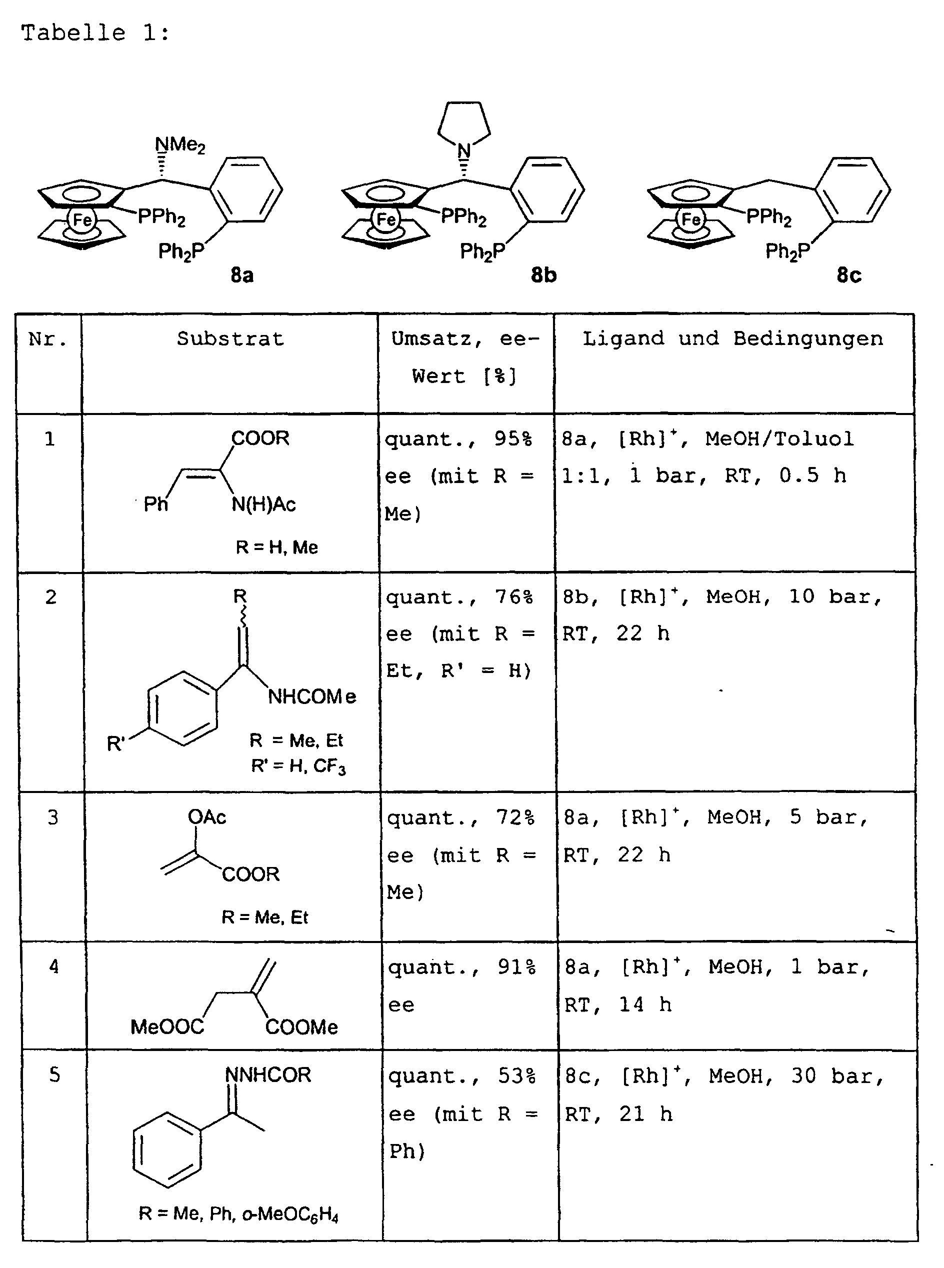

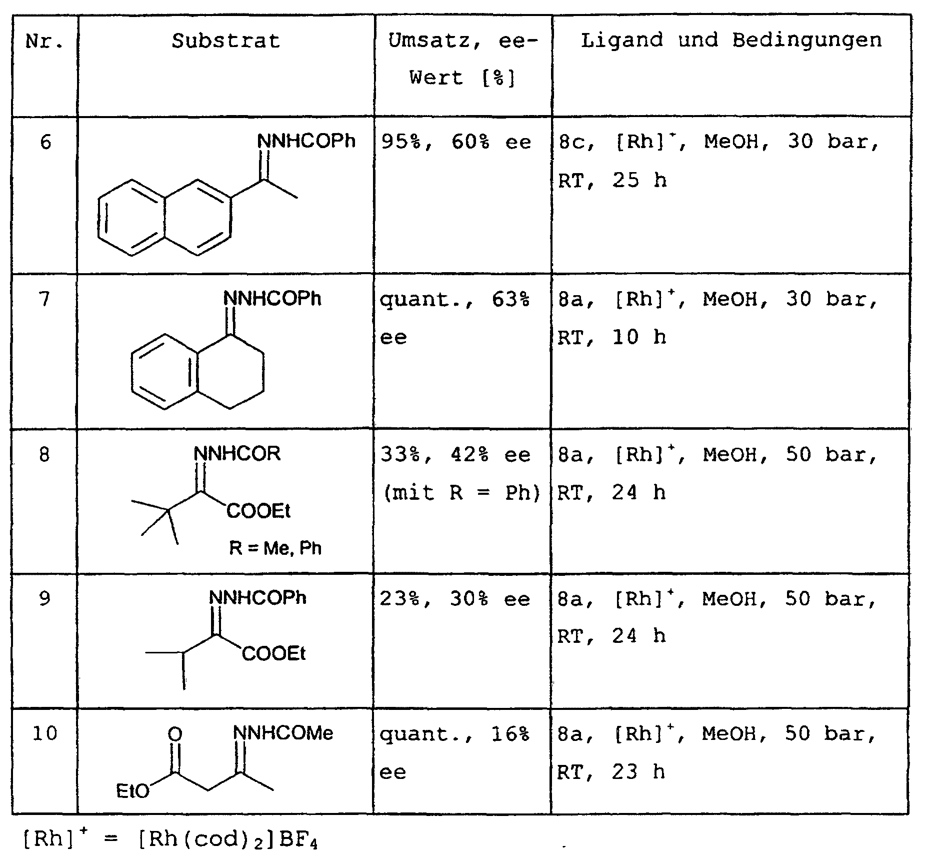

Wie aus der Tabelle 1 abzulesen ist, gestatten es die neuen Liganden-/Katalysatorsysteme, verschiedenste Substrate mit moderaten bis sehr guten Enantiomerenüberschüssen zu hydrieren.

Die Ligandensysteme sind darüber hinaus derart oxidationsunempfindlich, daß sie bei Umgebungsbedingungen lange Zeit unverändert haltbar sind. Dies ist für die Lagerung bei einer möglichen technischen Anwendung im großen Maßstab von Vorteil.

Als linear oder verzweigte (C₁-C₁₈)-Alkylreste sind anzusehen Methyl, Ethyl, *n*-Propyl, Isopropyl, *n*-Butyl, Isobutyl, *sec*-Butyl, *tert*-Butyl, Pentyl, Hexyl, Heptyl oder Octyl bis zum 18 C-Atome enthaltenden Rest samt aller ihrer Bindungsisomeren. Der Rest (C₁-C₁₈)-Alkoxy entspricht dem Rest (C₁-C₁₈)-Alkyl mit der Maßgabe, daß dieser über ein Sauerstoffatom an das Molekül gebunden ist. Als (C₂-C₈)-Alkoxyalkyl sind Reste gemeint, bei denen die Alkylkette durch mindestens eine Sauerstoffunktion unterbrochen ist, wobei nicht zwei Sauerstoffatome miteinander verbunden sein können. Die Anzahl der Kohlenstoffatome gibt die Gesamtzahl der im Rest enthaltenen Kohlenstoffatome an. Für (C₁-C₈)-Alkylreste gilt das entsprechende mit der Maßgabe, daß lediglich max. 8 C-Atome im Rest vorhanden sein können.

Die eben beschriebenen Reste können einfach oder mehrfach mit Halogenen und/oder N-, O-, P-, S-atomhaltigen Resten substituiert sein. Dies sind insbesondere Alkylreste der oben genannten Art, welche eines oder mehrere dieser Heteroatome in ihrer Kette aufweisen bzw. welche über eines dieser Heteroatome an das Molekül gebunden sind. Für die Reste mit bis zu 8 C-Atomen gilt das oben gesagte entsprechend.

Unter (C₃-C₆)-Cycloalkyl versteht man Cyclopropyl, Cyclobutyl, Cyclopentyl, Cyclohexyl bzw. Cycloheptylreste etc. Diese können mit einem oder mehreren Halogenen und/oder N-, O-, P-, S-atomhaltige Reste substituiert sein und/oder N-, O-, P-, S-atomhaltige Reste im Ring aufweisen, wie z. B. 1-, 2-, 3-, 4-Piperidyl, 1-, 2-, 3-Pyrrolidinyl, 2-, 3-Tetrahydrofuryl, 2-, 3-, 4-Morpholinyl.

Ein (C₃-C₈)-Cycloalkyl-(C₁-C₈)-Alkylrest bezeichnet einen wie oben dargestellten Cycloalkylrest, welcher über einen wie oben angegebenen Alkylrest an das Molekül gebunden ist.

(C₁-C₁₈)-Acyloxy bedeutet im Rahmen der Erfindung einen wie oben definierten Alkylrest mit max. 18 C-Atomen, welcher über eine COO-Funktion an das Molekül gebunden ist. Für (C₁-C₈)-Acyloxy gilt entsprechendes für den 8 C-Atome enthaltenden Alkylrest.

(C₁-C₁₈)-Acyl bedeutet im Rahmen der Erfindung einen wie oben definierten Alkylrest mit max. 18 C-Atomen, welcher über eine CO-Funktion an das Molekül gebunden ist. Für (C₁-C₈)-Acyl gilt entsprechendes für den 8 C-Atome enthaltenden Alkylrest.

Unter einem (C₆-C₁₈)-Arylrest wird ein aromatischer Rest mit 6 bis 18 C-Atomen verstanden. Insbesondere zählen hierzu Verbindungen wie Phenyl-, Naphthyl-, Anthryl-, Phenanthryl-, Biphenylreste, welche ggf. mit (C₁-C₈)-Alkoxy, NR⁶R⁷, (C₁-C₈)-Acyl, (C₁-C₈)-Acyloxy substituiert sein können.

Ein (C₇-C₁₉)-Aralkylrest ist ein über einen (C₁-C₈)-Alkylrest an das Molekül gebundener (C₆-C₁₈)-Arylrest.

Ein (C₃-C₁₈)-Heteroarylrest bezeichnet im Rahmen der Erfindung ein fünf-, sechs- oder siebengliedriges aromatisches Ringsystem aus 3 bis 18 C-Atomen, welches Heteroatome wie z. B. Stickstoff, Sauerstoff oder Schwefel im Ring aufweist. Als solche Heteroaromaten werden insbesondere Reste angesehen, wie 1-, 2-, 3-Furyl, wie 1-, 2-, 3-Pyrrolyl, 1-, 2-, 3-Thienyl, 2-, 3-, 4-Pyridyl, 2-, 3-, 4-, 5-, 6-, 7-Indolyl, 3-, 4-, 5-Pyrazolyl, 2-, 4-, 5-Imidazolyl, Acridinyl, Chinolinyl, Phenanthridinyl, 2-, 4-, 5-, 6-Pyrimidinyl.

Unter einem (C₄-C₁₉)-Heteroaralkyl wird ein dem (C₇-C₁₉)-Aralkylrest entsprechendes heteroaromatisches System verstanden.

Als Halogene (Hal) kommen Fluor, Chlor, Brom und Iod in Frage.

Unter Salzen versteht man ionische Additionsverbindungen aus starken Säuren wie HCl, HBr, H₂SO₄, H₃PO₄, CF₃COOH, p-Toluolsulfonsäure, Methansulfonsäure und dem betrachteten Molekül.

PEG bedeutet Polyethylenglykol.

Unter dem Begriff enantiomerenangereichert wird im Rahmen der Erfindung der Anteil eines Enantiomers im Gemisch mit seiner optischen Antipode in einem Bereich von >50 % und <100 % verstanden.

Unter Salzen versteht man ionische Additionsverbindungen aus starken Säuren wie HCl, HBr, H₂SO₄, H₃PO₄, CF₃COOH, p-Toluolsulfonsäure, Methansulfonsäure und dem betrachteten Molekül.

Unter dem Begriff diastereomerenangereichert versteht man den Überschuß eines Diastereomers gegenüber einem oder mehreren anderen.

Die Nennung der erfindungsgemäßen Komplexe und Liganden beinhaltet im Rahmen der Erfindung alle möglichen Diastereomere, wobei auch die beiden optischen Antipoden eines jeweiligen Diastereomeren benannt sein sollen.

### Beispiele:

### 1.) Herstellung der Liganden

### Darstellung von o-Brombenzoylferrocen (1)

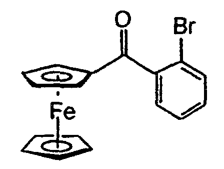

In einem 250 ml Rundkolben mit Argoneinlaß und Tropftrichter wurde Ferrocen (10.0 g, 53.8 mmol) in CH₂Cl₂ (50 ml) gelöst und auf 0 °C abgekühlt. Danach wurde in einem Tropftrichter Aluminium(III)-chlorid (7.88 g, 59.1 mmol) in CH₂Cl₂ (50 ml) suspendiert und tropfenweise *o*-Brombenzoylchlorid (12.4 g, 7.4 ml, 56.4 mmol) mittels einer Spritze zugegeben. Die erhaltene Lösung wurde aus dem Tropftrichter zum Ferrocen zugetropft. Es tritt eine intensive dunkelviolette Färbung auf. Nach 2 h Rühren wurde bei 0 °C langsam Wasser (15 ml) zugegeben. Nach Beendigung der unter starker Gasentwicklung verlaufenden Hydrolyse wurde die Lösung mit CH₂Cl₂ (100 ml) verdünnt und mit Kaliumcarbonatlösung (50 ml) und ges. Kochsalzlösung (50 ml) gewaschen. Die organische Phase wurde über Magnesiumsulfat getrocknet, filtriert und am Rotationsverdampfer eingeengt. Das Rohprodukt wurde säulenchromatographisch (Pentane/*tert*-Butylmethylether = 4/1) gereinigt. Das Keton 1 (16.1 g, 43.6 mmol, 81 %) wurde als dunkelroter Feststoff (Smp.: 102 °C) erhalten.

IR (KBr) : 3104 (w), 3092 (w), 1643 (vs), 1447 (m), 1292 (s), 1027 (s), 738 (s).

¹H-NMR (CDCl₃, 300 MHz):δ = 7.63-7.59 (m, 1H), 7.49-7.46 (m, 1H), 7.40-7.24 (m, 2H), 4.71 (s, 1H), 4.57 (s, 1H), 4.26 (s, 5H).

MS (EI): 370 (M⁺¹, 100), 368 (M^{-1,} 98), 288 (23), 215 (8), 185 (8).

| | | | | |
|---|---|---|---|---|
| C₁₇H₁₃BrFeO (369.05):Ber. | C | 55.33, | H | 3.55. |
| Gef. | C | 55.26, | H | 3.53. |

### Darstellung von (R)-(α-Hydroxy-o-bromphenylmethyl)-ferrocen (2)

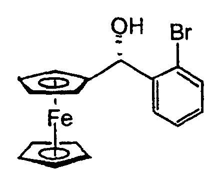

In einem 250 ml Rundkolben mit Argoneinlass wurde das "Methyloxazaborolidin" (EP 305180) (0.90 g, 3.25 mmol, 0.3 Äquiv.) in THF (10 ml) gelöst bei 0 °C vorgelegt. Je eine Spritze wurde unter Argon mit einer Lösung des Ketons 1 (4.00 g, 10.80 mmol) in THF (20 ml) bzw. des Boran-Dimethylsulfid-Komplexes (1.1 ml, 11 mmol) in THF (11 ml) beschickt. Zunächst wurden 20 % der Boranlösung (2.4 ml) zugetropft und 5 min gerührt. Dann wurde innerhalb von 2 h die restliche Boranlösung und das Keton mittels einer Spritzpumpe simultan zugetropft. Die dunkle orangefarbene Reaktionslösung wurde nach beendeter Zugabe noch eine Stunde nachgerührt. Dann wurde tropfenweise mit Methanol (4 ml) überschüssiges Boran zerstört. Danach wurde die Reaktionslösung in ges. Ammoniumchloridlösung (30 ml) gegossen und mit Diethylether (50 ml) extrahiert. Die organischen Phasen wurde über Magnesiumsulfat getrocknet, filtriert und am Rotationsverdampfer eingeengt. Das Rohprodukt wurde säulenchromatographisch (Pentane/*tert*-Butylmethylether = 4/1) gereinigt. Der Alkohol 2 (3.80 g, 10.26 mmol, 95 %, *ee* = 96 %) wurde als orangefarbener Feststoff (Smp.: 71 °C) erhalten.

[α]_{D}²⁰ = - 132 ° (c = 1.11, CHCl₃)

HPLC (OD, 92% Heptan/ 8% Isopropanol, 0.6 ml/min): tr = 15.9 (R), 18.4 (S).

IR (KBr) : 3437 (w), 3096 (s), 2926 (s), 1104 (s), 1292 (s), 1016 (s), 747 (s).

¹H-NMR (CDCl₃, 300 MHz):δ = 7.65-7.07 (m, 4H), 5.81 (s, 1H), 4.41 (m, 1H), 4.26 (s, 5H), 4.20 (m, 1H), 4.16 (m, 2H), 2.74 (s, 1H).

MS (EI): 372 (M⁺¹, 21), 370 (M⁻¹, 22), 153 (100), 138 (40).

| | | | | |
|---|---|---|---|---|
| C₁₇H₁₅BrFeO (371.05):Ber. | C | 55.03, | H | 4.07. |
| Gef. | C | 55.86, | H | 3.95. |

### Darstellung von (R)-(α-Acetoxy-o-bromphenylmethyl)-ferrocen (3)

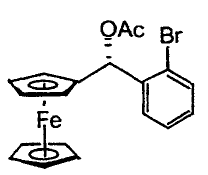

In einem 100 ml Rundkolben wurde der Alkohol 2 (3.5 g, 9.43 mmol) mit Pyridin (5 ml) und Acetanhydrid (2.5 ml) versetzt und die Lösung 12 h bei Raumtemperatur gerührt. Flüchtige Anteile wurden im Ölpumpenvakuum entfernt. Das Acetat 3 (3.90 g, 9.43 mmol) wurde in quantitativer Ausbeute als orangefarbener Feststoff (Smp. : 108 C) erhalten.

[α]_{D}²⁰ = - 33.2° (c= 1.11, CHCl₃)

IR (KBr) : 3449 (w), 3098 (w), 1740 (s), 1104 (s), 1222 (s), 1016 (s), 1042 (w), 1012 (w), 750 (s).

¹H-NMR (CDCl₃, 200 MHz):δ = 7.48-7.36 (m, 2H), 7.21-7.15 (m, 1H), 7.04-6.97 (m, 1H), 6.96 (s, 1H), 4.17-4.13 (m, 2H), 4.08-4-05 (m, 7H), 2.06 (s, 3H).

MS (EI): 414 (M⁺¹, 19), 412 (M⁻¹, 20), 180 (95), 153 (100), 121 (18).

| | | | | |
|---|---|---|---|---|
| C₁₉H₁₇BrFeO₂ (413.05):Ber. | C | 55.24, | H | 4.15. |
| Gef. | C | 55.99, | H | 4.42. |

### Darstellung von (R)-[α-(N,N-Dimethylamino)-obromphenylmethyl]-ferrocen (4)

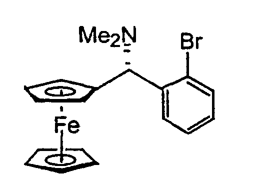

In einem 100 ml Rundkolben wurde das-Acetat 3 (3.9 g, 9.43 mmol) in Acetonitril (50 ml) und Dimethylamin (16 ml, 40%ig in Wasser) gelöst und 12 h bei Raumtemperatur gerührt. Die Reaktionslösung wurde danach am Rotationsverdampfer eingeengt, mit Diethylether extrahiert und mit ges. Kochsalzlösung gewaschen. Die organische Phasen wurde über Magnesiumsulfat getrocknet, filtriert und am Rotationsverdampfer eingeengt. Das Rohprodukt wurde säulenchromatographisch (Pentane/Diethylether = 4/1 bis rein Diethylether) gereinigt. Das Amin 4 (3.80 g, 10.26 mmol, 95 %) wurde als orangefarbener Feststoff (Smp.: 73 C) erhalten.

[α]_{D}²⁰ = - 67° (c= 1.02, CHCl₃)

IR (KBr) : 3084 (w), 2982 (m), 2939 (m), 2809 (s), 1467 (s), 1201 (m), 1004 (s), 814 (s), 752 (vs).

¹H-NMR (CDCl₃, 300 MHz):δ = 7.73-7.70 (m, 1H), 7.64-7.61 (m, 1H), 7.39-7.31 (m, 1H), 7.16-7-06 (m, 1H), 4.47 (s, 1H), 4.25-4.24 (m, 1H), 4.20-4.19 (m, 1H), 4.16-4.14 (m, 1H), 4.11-4.09 (m, 1H), 3.76 (s, 5H), 2.07 (s, 6H).

MS (EI): 399 (M⁺¹, 62), 397 (M⁻¹, 64), 355 (100), 353 (99), 242 (24), 186 (12), 153 (38), 152 (60), 121 (27).

| | | | | | | |
|---|---|---|---|---|---|---|
| C₁₉H₂₀BrFeN (398.12):Ber. | C | 57.32, | H | 5.06, | N | 3.52. |
| Gef. | C | 57.03, | H | 5.37, | N | 3.43. |

### Darstellung von (R)-[α-(N-Pyrrolidin)-o-bromphenylmethyl]-ferrocen (5)

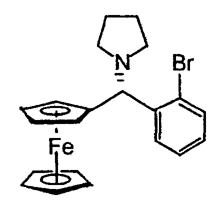

In einem 50 ml Rundkolben wurde das Acetat 3 (0.5 g, 1.20 mmol) in Acetonitril (15 ml), H₂O (2.5 ml) und Pyrrolidin (0.5 ml, 6 mmol, 5 Äquiv.) gelöst und 12 h bei Raumtemperatur gerührt. Die Reaktionslösung wurde danach am Rotationsverdampfer eingeengt, mit Diethylether extrahiert und mit ges. Kochsalzlösung gewaschen. Die organische Phase wurde über Magnesiumsulfat getrocknet, filtriert und am Rotationsverdampfer eingeengt. Das Rohprodukt wurde säulenchromatographisch (Pentane/*tert*-Butylmethylether = 3/1 bis rein *tert*-Butylmethylether) gereinigt. Das Amin 5 (0.48 g, 1.13 mmol, 94 %,) wurde als orangefarbener Feststoff (Smp.: 83 °C) erhalten.

[α]_{D}²⁰ = - 59.7° (c = 1.03, CHCl₃)

IR (KBr) : 2961-2933 (b), 2786 (s), 1106 (s), 820 (s), 747 (s).

¹H-NMR (CDCl₃, 300 MHz):δ = 7.81-7.78 (m, 1H), 7.64-7.61 (m, 1H), 7.38-7.31 (m, 1H), 7.15-7-12 (m, 1H), 4.49 (s, 1H), 4.25-4.23 (m, 2H), 4.16-4.13 (m, 1H), 4.10-4.08 (m, 1H), 3.84 (s, 5H), 2.37-2.27 (m, 4H), 1.69-1.65 (m, 4H).

MS (EI): 425 (M⁺¹, 42), 423 (M⁻¹, 45), 355 (93), 353 (100), 268 (44), 152 (87).

| | | | | | | |
|---|---|---|---|---|---|---|
| C₂₁H₂₂BrFeN (424.15):Ber. | C | 59.47, | H | 5.23, | N | 3.30. |
| Gef. | C | 59.22, | H | 5.21, | N | 3.58. |

### Darstellung von 1-[(R)-α-(N,N-Dimethylamino)-obromphenylmethyl]-2-[(S)-brom]-ferrocen (6)

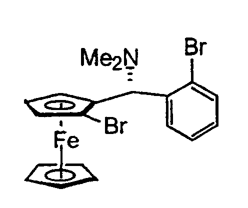

In einem 25 ml Rundkolben mit Argoneinlass wurde das Amin 4 (0.270 g, 0.68 mmol) in Diethylether (3 ml) gelöst und auf -78 °C gekühlt. Danach wurde *t*-BuLi (1.45 M in Pentan, 1.65 ml, 2.39 mmol, 3.5 Äquiv.) langsam zur Reaktionsmischung zugetropft. Die Reaktionslösung wurde auf Raumtemperatur erwärmt und noch 1 h gerührt. Schließlich wurde eine Lösung von C₂Br₂Cl₄ (0.487 g, 1.49 mmol, 2.2 Äquiv.) in Diethylether (2 ml) bei -78 °C zugetropft und die Mischung 2 h bei Raumtemperatur gerührt. Die Reaktionslösung wurde mit Diethylether (15 ml) extrahiert und mit ges. Kochsalzlösung gewaschen. Die organische Phase wurde über Magnesiumsulfat getrocknet, filtriert und am Rotationsverdampfer eingeengt. Das Rohprodukt wurde säulenchromatographisch (Pentane/Diethylether = 5/1 ) gereinigt. Das Amin 6 (0.26 g, 0.54 mmol, 80 %, *ee* = 97.5%) wurde als orangefarbener Feststoff (Smp.: 84 °C) erhalten.

[α]_{D}²⁰ = + 125.5 (c = 0.71, CHCl₃)

HPLC (OJ, 95 % Heptan,/ 5 % Isopropanol, 0.6 ml/min): tr = 7.1 (1R, 2S), 10.6 (1S, 2R).

¹H-NMR (CDCl₃, 300 MHz):δ = 7.56-7.54 (m, 1H), 7.20-7.18 (m, 2H), 7.07-7.00 (m, 1H), 5.06 (s, 1H), 4.47-4.46 (m, 1H), 4.37-4.36 (m, 1H), 4.18-4.13 (m, 1H), 4.12 (s, 5H), 2.43 (s, 6H).

MS (EI): 479 (M⁺², 30), 478 (M⁺¹, 12), 477 (M⁺., 61), 475 (M⁻², 33), 435 (17), 433 (36), 431 (18), 322 (14), 320 (15), 212 (74), 152 (100).

| | | | | | | |
|---|---|---|---|---|---|---|
| C₁₉H₁₉Br₂FeN (477.01):Ber. | C | 47.84, | H | 4.01, | N | 2.94. |
| Gef. | C | 47.72, | H | 3.94, | N | 2.79. |

### Darstellung von 1-(o-Bromphenylmethyl)-2-[(S)-brom]-ferrocen (7)

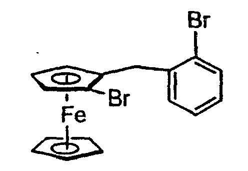

In einem 25 ml Rundkolben wurde das Amin 6 (0.295 g, 0.62 mmol) in Trifluoressigsäure (2 ml) gelöst und Triethylsilan (1 ml, 6.20 mmol, 10 Äquiv.) zugetropft. Die-Reaktionslösung wurde 72 h gerührt und dann mit Diethylether extrahiert, mit ges. wässeriger K₂CO₃ Lösung und mit ges. Kochsalzlösung gewaschen. Die organische Phasen wurde über Magnesiumsulfat getrocknet, filtriert und am Rotationsverdampfer eingeengt. Das Rohprodukt wurde säulenchromatographisch (Pentane/Diethylether = 20/1) gereinigt. Das Produkt 7 (0.152 g, 0.35 mmol, 57 %, *ee* = 97%) wurde als oranges Öl erhalten.

[α]_{D}²⁰ = - 28.5° (c = 1.04, CHCl₃)

HPLC (OJ, 98 % Heptan,/ 2 % Isopropanol, 0.6 ml/min): tr = 12.8 (1R, 2S), 15.6 (1S, 2R).

IR (KBr) : 3094 (b), 2926 (m), 1470 (m), 1439 (m), 1107 (m), 1024 (s), 821 (s), 740 (s).

¹H-NMR (CDCl_{3,} 300 MHz):δ = 7.56-7.53 (m, 1H), 7.21-7.16 (m, 1H), 7.11-7.04 (m, 2H), ,4.45 (m, 1H), 4.20 (s, 5H), 4.15 (m, 1H), 4.09 (m, 1H), 3.93 (m, 2H).

MS (EI): 436 (M⁺², 24), 435 (M⁺¹, 14), 434 (M⁺., 44), 432 (M⁻², 25), 217 (22), 152 (100).

| | | | | |
|---|---|---|---|---|
| C₁₇H₁₄Br₂FeN (433.94):Ber. | C | 47.05, | H | 3.25. |
| Gef. | C | 47.31, | H | 3.45. |

### Darstellung von 1-[o-(Diphenylphosphin)-phenylmethyl]-2-[(S)-diphenylphosphin]-ferrocen (8)

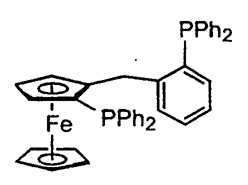

In einem 10 ml Rundkolben wurde die Verbindung 7 (0.120 g, 0.27 mmol) in THF (2 ml) gelöst und auf - 78 °C gekühlt. Dann wurde n-BuLi (1.6 M in Hexan, 0.37 ml, 0.59 mmol, 2.2 Äquiv.) bei -78 °C zugetropft. Die Reaktionslösung wurde 15 min. gerührt und danach ClPPh₂ (0.12 ml, 0.66 mmol, 2.4 Äquiv.) zugetropft. Nach 2 h Rühren bei Raumtemperatur wurde die Lösung mit Diethylether (10 ml) extrahiert und mit Wasser und ges. Kochsalzlösung gewaschen. Die organische Phase wurde mit Magnesiumsulfat getrocknet, filtriert und am Rotationsverdampfer eingeengt. Das Rohprodukt wurde säulenchromatographisch (Pentane/Diethylether = 20/1) gereinigt. Das Diphosphin 8 (0.130 g, 0.20 mmol, 75 %,) wurde als orangefarbener Feststoffe erhalten.

[α]_{D}²⁰ = + 46.4° (c = 0.59, CHCl₃)

¹H-NMR (CDCl_{3,} 300 MHz):δ = 7.55-7.48 (m, 2H), 7.26-7.03 (m, 19H), 6.86-6.85 (m, 2H), 6.67-6.64 (m, 1H), 4.19-4.18 (m, 1H), 4.10-4.05 (m, 3H), 3.86 (s, 5H), 3.65 (s,1H).

¹³C-NMR (CDCl₃, 75 MHz): δ = 145.6 (d, *J* = 25 Hz), 139.3-126.0 (m), 93.3 (d, *J* = 25 Hz), 75.4 (m), 72.7, 70.8, 69.8, 68.9, 33.1 (m).

³¹P-NMR (CDCl₃, 81 MHz): δ = -13.6 (d, *J* = 5.7 Hz), -21.9 (d, *J* = 5.7 Hz).

MS (EI): 645 (M⁺¹, 46), 644 (M^{+,} 56), 579 (27), 459 (100), 392 (44), 337 (65), 183 (70).

C₄₁H₃₄FeP₂ (644.50) HRMS: Ber.: 644.1485. Gef.: 644.1478.

### Darstellung von 1-[(R)-[α-(N,N-Dimethylamino)]-o-(diphenylphosphino)-phenylmethyl]-2-[(S)-diphenylphosphino]-ferrocen (9)

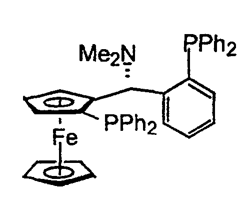

In einem 25 ml Rundkolben mit Argoneinlass wurde das Amin 4 (0.502 g, 1.26 mmol) in Diethylether (5 ml) gelöst und auf -78 °C gekühlt. Danach wurde *t*-BuLi (1.45 M in Pentan, 3.05 ml, 4.41 mmol, 3.5 Äquiv.) langsam zugetropft. Die Reaktionslösung wurde bei -78 °C 10 min gerührt und auf Raumtemperatur erwärmt und noch 1 h gerührt. Schließlich wurde ClPPh₂ (0.58 ml, 3.15 mmol, 2.5 Äquiv.) bei -78 °C zugetropft und nach Erwärmen der Mischung 2 h bei Raumtemperatur gerührt. Die Reaktionslösung wurde mit CH₂Cl₂ (15 ml) extrahiert und mit ges. Kochsalzlösung gewaschen. Die organische Phase wurde über Magnesiumsulfat getrocknet, filtriert und am Rotationsverdampfer eingeengt. Das Rohprodukt wurde säulenchromatographisch (Pentane/Diethylether = 5/1 ) gereinigt. Das Diphosphin 9 (0.763 g, 1.11 mmol, 88 %,) wurde als orangefarbener Feststoff (Smp.: 84 °C) erhalten.

[α]_{D}²⁰ = + 297° (c = 1.06, CHCl₃)

IR (KBr) : 3442 (w), 3067 (m), 3050 (m), 2776 (m), 1432 (s), 742 (s), 689 (vs).

¹H-NMR (CDCl₃, 300 MHz):δ = 7.52-7.42 (m, 2H), 7.32-6.66 (m, 22H), 6.12-5.92 (m, 1H), 4.55 (s, 1H), 4.28 (s, 1H), 3.87 (s, 1H), 3.82 (s, 5H), 2.02 (s, 6H).

¹³C-NMR (CDCl₃, 50 MHz): δ = 146.9 (d, *J* = 24.3 Hz), 139.5-126.4 (m), 98.5 (d, *J =* 24.7 Hz), 73.2 (d, *J* = 14 Hz), 71.5 (d, *J* = 4.5 Hz), 71.2 (d, *J* = 5.4 Hz), 70.1, 68.6, 64.5-64.1 (m), 43.2.

³¹P-NMR (CDCl₃, 81 MHz): δ = -16.7 (d, *J =* 19.1 Hz), -23.2 (d, *J* = 19.1 Hz).

MS (EI): 688 (M⁺¹, 23), 687 (M⁺, 37), 673 (23), 672 (40), 643 (33), 621 (43), 502 (67), 459 (73), 337 (100), 183 (94).

| | | | | | | |
|---|---|---|---|---|---|---|
| C₄₃H₃₉FeNP₂ (687.57): Ber. | C | 75.11, | H | 5.72, | N | 2.04. |
| Gef. | C | 74.87, | H | 5.64, | N | 1.97. |

### Darstellung von 1-[(R)-[α-(N-Pyrrolidin}-o-(diphenylphosphino)phenylmethyl]-2-[(S)-diphenylphosphino]-ferrocen (10)

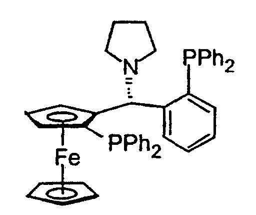

In einem 50 ml Rundkolben mit Argoneinlass wurde das Amin 5 (0.335 g, 0.81 mmol) in Diethylether (15 ml) gelöst und auf -78 °C gekühlt. Danach wurde *t*-BuLi (1.45 M in Pentan, 1.96 ml, 2.84 mmol, 3.5 Äquiv.) langsam zugetropft. Die Reaktionslösung wurde bei -78 °C 10 min gerührt und auf Raumtemperatur erwärmt und noch 1 h gerührt. Schließlich wurde ClPPh2 (0.37 ml, 2.02 mmol, 2.5 Äquiv.) bei -78 °C zugetropft und 2 h bei Raumtemperatur gerührt. Die Reaktionslösung wurde mit CH₂Cl₂ (15 ml) extrahiert und mit ges. Kochsalzlösung gewaschen. Die organische Phase wurde über Magnesiumsulfat getrocknet, filtriert und am Rotationsverdampfer eingeengt. Das Rohprodukt wurde säulenchromatographisch (Pentane/Diethylether = 5/1 ) gereinigt. Das Diphosphin 10 (0.370 g, 0.52 mmol, 64 %) wurde als orangefarbener Feststoff (Smp.: 94 °C) erhalten.

[α]_{D}²⁰ = + 232° (c = 1.14, CHCl₃)

IR (KBr) : 3458 (w), 3050 (m), 2962 (m), 2871 (m), 1432 (s), 742 (vs), 689 (vs).

¹H-NMR (CDCl₃, 300 MHz):δ = 7.72-7.64 (m, 1H), 7.59-7.52 (m, 2H), 7.37-6.76 (m, 21H), 6.10-5.84 (m, 1H), 4.62-4.52 (m, 1H), 4.30 (s, 1H), 3.92 (s, 1H), 3.78 (s, 5H), 2.50-2.32 (m, 4H), 1.38-1.10 (m, 4H).

¹³C-NMR (CDCl₃, 75 MHz): δ = 148.6 (d, *J* = 25 Hz), 139.4-126.1 (m), 98.8 (d, *J* = 23 Hz), 76.4, 72.4 (d, *J* = 14.9 Hz), 71.1 (m), 69.7, 68.1, 62.5 (m), 51.5, 22.9.

³¹P-NMR (CDCl₃, 81 MHz): δ = -17.1 (d, *J* = 20.3 Hz), -22.4 (d, *J* = 20.3 Hz).

MS (EI): 714 (M⁺¹, 22), 713 (M⁺, 62), 656 (36), 528 (18), 459 (100), 337 (63), 183 (36).

| | | | | | | |
|---|---|---|---|---|---|---|
| C₄₅H₄₁FeNP₂ (713.60): Ber. | C | 75.74, | H | 5.79, | N | 1.96. |
| Gef. | C | 74.61, | H | 5.79, | N | 1.68. |

HRMS: Ber.: 713.2064 Gef.: 713.2083

### 2) Umsetzungen mit den Liganden/Komplexen

### Typische Arbeitsvorschrift zur Hydrierung im Schlenkgefäß mit H₂-Ballon

In ein 50 ml-Schlenkgefäß wurden 0.01 mmol [Rh(nbd)₂]BF₄ (0.0037g, 1.0 eq) mit 1.05-1.10 eq. des entsprechenden Ferrocenylliganden eingewogen, dreimal evakuiert und mit Argon belüftet und anschließend in 4 ml des angegebenen Lösungsmittels gelöst. Nach ca. 30 min wurde die orangefarbene Lösung mit einer Lösung aus 1.0 mmol des entsprechenden Substrats (100 eq) in 4 ml Lösungsmittel versetzt. Die Reaktionslösung wurde kurz evakuiert und der H₂-Ballon angeschlossen, wobei sehr schnell eine Farbvertiefung auftrat. In einigen Fällen konnte eine zweite Farbänderung zu orange-braun beobachtet werden, die das Ende der Reaktion anzeigte. Nach der angegebenen Reaktionszeit wurde der H₂-Ballon entfernt, die Lösung auf ca. 1/3 des Volumens eingeengt, über Kieselgel filtriert und vollständig eingeengt. Der Umsatz wurde mittels ¹H-NMR bestimmt.

### Typische Arbeitsvorschrift zur Hydrierung im Autoklaven

In ein Schlenkgefäß wurden 0.01 mmol [Rh(nbd)₂]BF₄ (0.0037g, 1.0 eq) mit 1.05-1.10 eq des entsprechenden Ferrocenliganden eingewogen, dreimal evakuiert und mit Argon belüftet und anschließend in 4 ml des angegebenen Lösungsmittels aufgenommen. Das Substrat (1.00 mmol, 100 eq) wurde in den Glaseinsatz des Autoklaven eingewogen, der Autoklav verschraubt, dreimal evakuiert und mit Argon belüftet. (Wenn das eingesetzte Substrat leicht flüchtig ist, wurde es nach ca. 30 min zu der Katalysatorlösung gegeben und der leere Autoklav evakuiert und mit Argon belüftet.) Die Katalysatorlösung wurde mittels Spritze in den Autoklaven gegeben und das Schlenkgefäß mit 4 ml Lösungsmittel nachgewaschen. Der Autoklav wurde verschlossen, dreimal mit 5-10 bar H₂ beschickt und der angegebene Druck eingestellt. Bei Reaktionen die nicht bei Raumtemperatur durchgeführt wurden, wurden zuerst auf die gewünschte Temperatur erwärmt (bzw. abgekühlt) und dann der Druck eingestellt. Nach der angegebenen Reaktionszeit wurde der Wasserstoff abgelassen und das Reaktionsgemisch vollständig eingeengt. Der Rückstand wurde in Ether (oder bei unvollständiger Reaktion in Ether/Methanol) aufgenommen, über Kieselgel filtriert und erneut eingeengt. Der Umsatz wurde mittels ¹H-NMR bestimmt.

### Ergebnisse siehe Tabelle 1

Eintrag 1 Übersichtstabelle:

### 3-Phenyl-2-acylamidopropansäuremethylester:

Der Enantiomerenüberschuß wurde mittels GC (Chirasil -Val, 140°C isotherm: t_{R}/min = 10.1 (R), 11.7 (S)) bestimmt.

### 3-Phenyl-2-acylamidopropansäure:

Das Rohprodukt wurde in einem Gemisch aus je 5 ml Methanol und Ether gelöst und vorsichtig mit 1.0 ml Trimethylsilyldiazomethan (2.0 molar in Hexan) versetzt. Nach 2 h wurden alle flüchtigen Bestandteile abgezogen und Umsatz und Enantiomerenüberschuß, wie oben beschrieben, bestimmt.

### Eintrag 2 Übersichtstabelle:

Darstellung der Enamide und analytische Daten der Hydrierungsprodukte analog Literaturmethoden.

### Eintrag 3 Übersichtstabelle:

Darstellung der Enolester und analytische Daten der Hydrierungsprodukte analog Literaturmethoden.

### Eintrag 4 Übersichtstabelle:

Dimethylitaconat Fa. Aldrich, analytische Daten des Hydrierungsprodukts analog Literaturmethoden.

### Eintrag 5 und 6 Übersichtstabelle:

Darstellung *Acetophenon-N-benzoylhydrazon* und *1-(2-Naphthyl)ethyl-N-benzoylhydrazon* und analytische Daten der Hydrierungsprodukte analog Literaturmethoden.

### 1-Phenyl-1-(2-acetylhydrazino)ethan:

HPLC (OJ, 30°C, 5% iPrOH, 0.8 ml/min): t_{R}/min = 15.4, 18.7

### 1-Phenyl-1-(2-p-methoxybenzoylhydrazino)ethan:

HPLC (OJ, 30°C, 10% iPrOH, 0.5 ml/min): t_{R}/min = 27.9 (S), 30.8 (R)

### Eintrag 7 Übersichtstabelle:

### 1-Tetralon-N-benzoylhydrazon:

Eine Suspension aus 8.46 g Benzoylhydrazin (62 mmol) und 10.0 ml α-Tetralon (62 mmol) in 80 ml THF wurde mit 3 Tropfen konz. HCl versetzt, wobei sofort eine blaß gelbe Lösung entstand. Nach 24 h wurde die Lösung auf ca. 1/2 des Volumens eingeengt und mit Ether verdünnt. Der ausgefallene farblose Feststoff wurde abfiltriert, zweimal mit 10 ml THF und dreimal mit 20 ml Ether gewaschen. Ausbeute: 7.63 g farbloser Feststoff, durch Aufarbeitung der Mutterlauge konnten weitere 8.40 g isoliert werden (61 mmol, 98%).

IR (KBr): 3204 (m), 3063 (m), 3005 (m), 2925 (m), 1654 (s), 1639 (s), 1537 (s), 1283 (s), 1136 (m), 763 (m), 713 (m), 694 (m)

¹H-NMR (CDCl₃, 300 MHz): δ = 9.10 (br s, 1H), 8.40-7.80 (m, 3H), 7.60-7.40 (m, 3H), 7.30-7.10 (m, 3H), 2.79 (t, *J* = 6.1 Hz, 2H), 2.66 (t, *J* = 6.5 Hz, 2H), 1.97 (m, 2H)

¹³C-NMR (CDCl₃, 75 MHz): δ = 139.8, 131.7, 129.6, 128.4, 126.6, 125.3, 29.4, 25.1, 21.7

MS (EI, 70 eV): m/z = 264.1260 (M⁺, 14%, C₁₇H₁₆N₂O ber.: 264.1263), 148 (24), 105 (100), 77 (42)

### 1-Tetralon-N-benzoylhydrazin:

HPLC (OD, 40°C, 10% iPrOH, 0.6 ml/min): t_{R}/min = 16.9, 22.5

¹H-NMR (CDCl₃, 200 MHz): δ = 7.93 (br s, 1H), 7.80-7.70 (m, 2H), 7.60-7.30 (m, 5H), 7.20-7.00 (m, 2H), 4.90 (br s, 1H), 4.11 (t, *J* = 3.7 Hz, 1H), 2.80-2.60 (m, 2H), 2.10-1.95 (m, 2H), 1.80-1.60 (m, 2H)

¹³C-NMR (CDCl₃, 75 MHz): δ = 167.5, 138.0, 135.4, 132.7, 131.7, 129.6, 129.0, 128.5, 127.4, 126.7, 125.9, 57.5, 29.2, 26.8, 18.0

### Eintrag 8 Übersichtstabelle:

Darstellung des Hydrazons analog Literaturmethoden.

### 2-Acetylhydrazino-3,3-dimethylbutansäureethylester:

HPLC (OD, 40°C, 13% iPrOH, 0.8 ml/min): t_{R}/min = 7.0, 10.1

### 2-Benzoylhydrazino-3,3-dimethylbutansäureethylester:

HPLC (OD, 30°C, 3% iPrOH, 0.8 ml/min): t_{R}/min = 20.3, 23.9

### Eintrag 9 Übersichtstabelle:

### 2-Benzoylhydrazino-3-methylbutansäureethylester:

HPLC (OD, 20°C, 5% iPrOH, 0.6 ml/min): t_{R}/min = 20.1, 23.8

### Eintrag 10 Übersichtstabelle:

Darstellung des Hydrazons analog Literaturmethoden.

### 3-Acetylhydrazinobutansäureethylester:

HPLC (AD, 30°C, 4% iPrOH, 0.6 ml/min): t_{R}/min = 39.6, 43.5

## Patentansprüche

1. Enantiomerenangereicherte Liganden der allgemeinen Formel (I) und deren Salze
worin 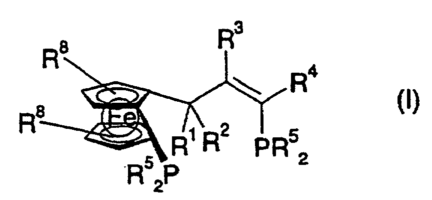 R¹, R² unabhängig voneinander bedeuten R⁸, NR⁶R⁷, SR⁶, (C₁-C₁₈)-Alkyl, (C₁-C₁₈)-Alkoxy, (C₂-C₁₈)-Alkoxyalkyl, (C₁-C₁₈)-Acyloxy, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl-(C₆-C₁₈)-Aryl, (C₁-C₈)-Alkyl- (C₃-C₁₉)-Heteroalkyl, (C₃-C₈) -Cycloalkyl, (C₁-C₈)-Alkyl-(C₃-C₈)-Cycloalkyl (C₃-C₈)-Cycloalkyl-(C₁-C₈)-Alkyl,
oder R¹ und R² sind über einen (C₃-C₇)-Carbocyclus, welcher einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert sein und/oder im Ring Heteroatome wie N, O, P, S enthalten kann, verbunden,
R³, R⁴ unabhängig voneinander bedeuten H, (C₁-C₁₈)-Alkyl, (C₁-C₁₈)-Alkoxy, (C₂-C₁₈) -Alkoxyalkyl, (C₁-C₁₈)-Acyloxy, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, (C₃-C₈)-Cycloalkyl- (C₁-C₈)-Alkyl,
oder R³ und R⁴ sind über eine (C₃-C₅)-Brücke, welche eine oder mehrere Doppelbindungen enthalten und/oder einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert sein und/oder im Ring Heteroatome wie N, O, P, S enthalten kann, verbunden,
R⁵ bedeutet (C₁-C₁₈)-Alkyl, (C₆-C₁₈)-Aryl, (C₃-C₁₈)-Heteroaryl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, wobei die Reste R⁵ an demselben und/oder den beiden Phosphoratomen verschieden sein können,
R⁶, R⁷ unabhängig voneinander bedeuten H, (C₁-C₁₈)-Alkyl, (C₁-C₁₈)-Alkoxy, (C₂-C₁₈)-Alkoxyalkyl, (C₁-C₁₈)-Acyl, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, (C₃-C₆)-Cycloalkyl-(C₁-C₈)-Alkyl,
oder R⁶ und R⁷ sind über einen (C₃-C₇)-Carbocyclus, welcher einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert sein und/oder im Ring Heteroatome wie N, O, P, S enthalten kann, verbunden,
R⁸ H oder einen Rest B-X-Z bedeutet, wobei B ein Rest der Gruppe CR⁹₂, NR⁹, O, S, SiR⁹₂ ist, X ein Spacer wie z. B. 1,4'-Biphenyl, 1-, 2-Ethylen, 1-, 3-Propylen, PEG-(2-10) ist und Z einen über eine funktionelle Gruppe, wie z. B. die O-, NH-, COO-, CONH, Ethenyl-, NHCONH-, OCONH- oder NHCOO-, an ein Polymer gebundenen Rest darstellt,
oder die Reste R⁸ der beiden Cyclopentadienylringe sind über eine α,ω-(C₂-C₄)-Alkylenbrücke miteinander verbunden,
R⁹ bedeutet H, (C₁-C₁₈)-Alkyl.

2. Verbindungen nach Anspruch 1,
**dadurch gekennzeichnet, daß**
R¹, R² unabhängig voneinander bedeuten H, NR⁶R⁷, (C₁-C₈)-Alkyl, (C₁-C₈)-Acyloxy, (C₆-C₈)-Aryl, (C₃-C₈)-Cycloalkyl,
oder R¹ und R² sind über einen (C₃-C₇)-Carbocyclus verbunden,
R³, R⁴ unabhängig voneinander bedeuten (C₁-C₈)-Alkyl, (C₆-C₁₈)-Aryl, (C₃-C₈)-Cycloalkyl,
oder R³ und R⁴ sind über eine (C₃-C₅)-Brücke, welche eine oder mehrere Doppelbindungen enthalten kann, verbunden,
R⁵ bedeutet (C₆-C₁₈)-Aryl, (C₃-C₈)-Cycloalkyl,
R⁶, R⁷ unabhängig voneinander bedeuten (C₁-C₁₈)-Alkyl, (C₁-C₁₈)-Acyl, (C₆-C₁₈)-Aryl, (C₃-C₈)-Cycloalkyl,
oder R⁶ und R⁷ sind über einen (C₃-C₇)-Carbocyclus verbunden,
R⁸ bedeutet H.

3. Enantiomerenangereicherte Komplexe der allgemeinen Formel (II) und deren Salze 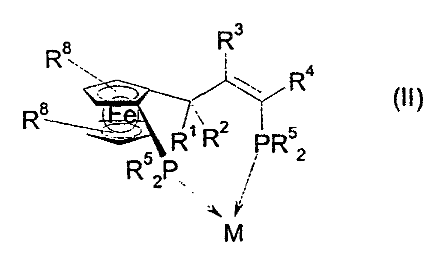 worin
R¹, R² unabhängig voneinander bedeuten R⁸, NR⁶R⁷, SR⁶, (C₁-C₁₈)-Alkyl, (C₁-C₁₈)-Alkoxy, (C₂-C₁₈)-Alkoxyalkyl, (C₁-C₁₈)-Acyloxy, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl- (C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, (C₃-C₈)-Cycloalkyl-(C₁-C₈)-Alkyl,
oder R¹ und R² sind über einen (C₃-C₇)-Carbocyclus, welcher einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert und/oder im Ring Heteroatome wie N, O, P, S enthalten kann, verbunden,
R³, R⁴ unabhängig voneinander bedeuten H, (C₁-C₁₈)-Alkyl, (C₁-C₁₈)-Alkoxy, (C₂-C₁₈)-Alkoxyalkyl, (C₁-C₁₈)-Acyloxy, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, (C₃-C₈)-Cycloalkyl-(C₁-C₈)-Alkyl,
oder R³ und R⁴ sind über eine (C₃-C₅)-Brücke, welche eine oder mehrere Doppelbindungen enthalten und/oder einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert und/oder im Ring Heteroatome wie N, O, P, S enthalten kann, verbunden,
R⁵ bedeutet (C₁-C₁₈)-Alkyl, (C₆-C₁₈)-Aryl, (C₃-C₁₈)-Heteroaryl, (C₁-C₈)-Alkyl-(C₆-C₁₈)-Aryl, (C₁-C₈)-Alkyl-(C₃-C₁₉)-Heteroalkyl, (C₃-C₈)-Cycloalkyl, (C₁-C₈)-Alkyl-(C₃-C₈)-Cycloalkyl, wobei die Reste R⁵ an demselben und/oder den beiden Phosphoratomen verschieden sein können,
R⁶, R⁷ unabhängig voneinander bedeuten H, (C₁-C₁₈)-Alkyl, (C₁-C₁₈)-Alkoxy, (C₂-C₁₈)-Alkoxyalkyl, (C₁-C₁₈)-Acyl, (C₆-C₁₈)-Aryl, (C₇-C₁₉)-Aralkyl, (C₃-C₁₈)-Heteroaryl, (C₄-C₁₉)-Heteroaralkyl, (C₁-C₈)-Alkyl-(C₆-C₁₈)-Aryl, (C₁-C₈)-Alkyl- (C₃-C₁₉)-Heteroalkyl, (C₃-C₈)-Cycloalkyl, (C₁-C₈)-Alkyl-(C₃-C₈)-Cycloalkyl, (C₃-C₈)-Cycloalkyl-(C₁-C₈)-Alkyl,
oder R⁶ und R⁷ sind über einen (C₃-C₇)-Carbocyclus, welcher einfach oder mehrfach mit linear oder verzweigten (C₁-C₈)-Alkyl, (C₁-C₈)-Acyl, (C₁-C₈)-Alkoxy, (C₂-C₈)-Alkoxyalkyl substituiert und/oder im Ring Heteroatome wie N, O, P, S enthalten kann, verbunden,
R⁸ H oder einen Rest B-X-Z bedeutet, wobei B ein Rest der Gruppe CR⁹₂, NR⁹, O, S, SiR⁹₂ ist, X ein Spacer wie z. B. 1,4'-Biphenyl, 1-, 2-Ethylen, 1-, 3-Propylen, PEG-(2-10) ist und Z einen über eine funktionelle Gruppe, wie z. B. die O-, NH-, COO-, CONH, Ethenyl-, NHCONH-, OCONH- oder NHCOO-, an ein Polymer gebundenen Rest darstellt,
oder die Reste R⁸ der beiden Cyclopentadienylringe sind über eine α,ω-(C₂-C₄)-Alkylenbrücke miteinander verbunden,
R⁹ bedeutet H, (C₁-C₁₈)-Alkyl
und M ein Metallatom oder -ion der Nebengruppe 7 oder 8, wie z. B. Co, Ni, Rh, Ru, Ir, Pd, Re oder Pt ist.

4. Verbindungen nach Anspruch 3,
**dadurch gekennzeichnet, daß**
R¹, R² unabhängig voneinander bedeuten H, NR⁶R⁷, (C₁-C₈)-Alkyl, (C₁-C₈)-Acyloxy, (C₆-C₈)-Aryl, (C₃-C₈)-Cycloalkyl,
oder R¹ und R² sind über einen (C₃-C₇)-Carbocyclus verbunden,
R³, R⁴ unabhängig voneinander bedeuten (C₁-C₈)-Alkyl, (C₆-C₁₈)-Aryl, (C₃-C₈)-Cycloalkyl,
oder R³ und R⁴ sind über eine (C₃-C₅)-Brücke, welche eine oder mehrere Doppelbindungen enthalten kann, verbunden,
R⁵ bedeutet (C₆-C₁₈)-Aryl, (C₃-C₈)-Cycloalkyl,
R⁶, R⁷ unabhängig voneinander bedeuten (C₁-C₁₈)-Alkyl, (C₁-C₁₈)-Acyl, (C₆-C₁₈)-Aryl, (C₃-C₈)-Cycloalkyl,
oder R⁶ und R⁷ sind über einen (C₃-C₇)-Carbocyclus verbunden,
R⁸ bedeutet H,
und M ein Metallatom oder -ion der Nebengruppe 8, wie z. B. Rh, Ru, Pd ist.

5. Verfahren zur Herstellung der Liganden nach Anspruch 1 und/oder 2,
**dadurch gekennzeichnet, daß**
man Verbindungen der allgemeinen Formel (III) 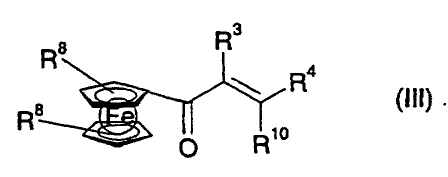 worin R³, R⁴ und R⁸ die oben angegebene Bedeutung annehmen können und R¹⁰ = Hal bedeutet,
enantioselektiv zu Verbindungen der allgemeinen Formel (IV) 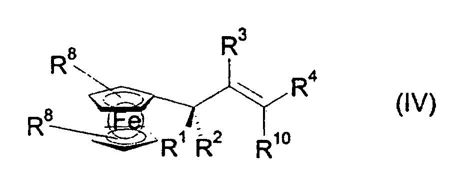 worin R¹, R² H oder OH sind, wobei R¹ und R² nicht gleich sein dürfen, R³, R⁴ und R⁸ die oben angegebene Bedeutung annehmen können und R¹⁰ = Hal bedeutet,
umsetzt.

6. Verfahren nach Anspruch 5,
**dadurch gekennzeichnet, daß**
man Verbindungen der allgemeinen Formel (IV) worin R¹, R² H oder OH sind, wobei R¹ und R² nicht gleich sein dürfen, R³, R⁴ und R⁸ die oben angegebene Bedeutung annehmen können und R¹⁰ = Hal bedeutet, in Verbindungen der allgemeinen Formel (V) 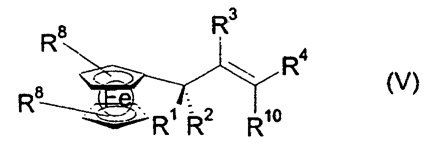 worin R¹, R² H oder N(C₁-C₈)-Alkyl₂ sind, wobei R¹ und R² nicht gleich sein dürfen, R³, R⁴ und R⁸ die oben angegebene Bedeutung annehmen können und R¹⁰ = Hal bedeutet,
überführt.

7. Verfahren nach Anspruch 6,
**dadurch gekennzeichnet, daß**
man Verbindungen der allgemeinen Formel (V) worin R¹, R² H oder N(C₁-C₈)-Alkyl₂ sind, wobei R¹ und R² nicht gleich sein dürfen, R³, R⁴ und R⁸ die oben angegebene Bedeutung annehmen können und R¹⁰ = Hal bedeutet, in Verbindungen der allgemeinen Formel (VI) 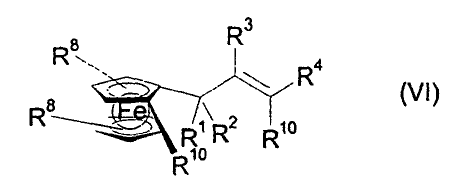 worin R¹, R² H oder N(C₁-C₈)-Alkyl₂ sind, wobei R¹ und R² nicht gleich sein dürfen, R³, R⁴ und R⁸ die oben angegebene Bedeutung annehmen können und R¹⁰ = Li bedeutet,
überführt.

8. Verfahren nach Anspruch 7,
**dadurch gekennzeichnet, daß**
man Verbindungen der allgemeinen Formel (VI) worin R¹, R² H oder N(C₁-C₈)-Alkyl₂ sind, wobei R¹ und R² nicht gleich sein dürfen, R³, R⁴ und R⁸ die oben angegebene Bedeutung annehmen können und R¹⁰ = Li bedeutet, in Verbindungen der allgemeinen Formel (I) 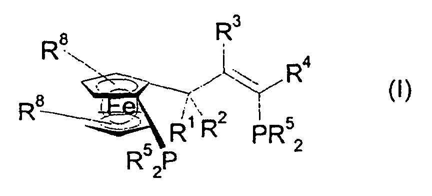 worin R¹ bis R⁹ die in Anspruch 1 angegebene Bedeutung annehmen können,
überführt.

9. Verwendung der Liganden gemäß Anspruch 1 in Katalysatoren zur homogenen enantioselektiven Hydrierung.

10. Verwendung der Komplexe nach Anspruch 3 zur homogenen enantioselektiven Hydrierung.

## Claims

1. Enantiomerically enriched ligands of the general formula (I) and their salts
wherein 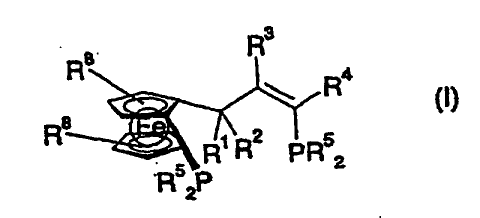 R¹, R² each independently of the other represents R⁸, NR⁶R⁷, SR⁶, (C₁-C₁₈)-alkyl, (C₁-C₁₈)-alkoxyl (C₂-C₁₈)-alkoxyalkyl, (C₁-C₁₈)-acyloxy, (C₆-C₁₈)-aryl, (C₇-C₁₉)-aralkyl, (C₃-C₁₈)-heteroaryl, (C₄-C₁₉)-heteroaralkyl, (C₁-C₈)-alkyl-(C₆-C₁₈)-aryl, (C₁-C₈)-alkyl-(C₃-C₁₉)-heteroalkyl, (C₃-C₈)-cycloalkyl, (C₁-C₈)-alkyl-(C₃-C₈)-cycloalkyl, (C₃-C₈)-cycloalkyl-(C₁-C₈)-alkyl,
or R¹ and R² are bonded *via* a (C₃-C₇)-carbocyclic ring which may be mono- or poly-substituted by linear or branched (C₁-C₈)-alkyl, (C₁-C₈)-acyl, (C₁-C₈)-alkoxy, (C₂-C₈)-alkoxyalkyl and/or may contain hetero atoms such as N, O, P, S in the ring,
R³, R⁴ each independently of the other represents H, (C₁-C₁₈)-alkyl, (C₁-C₁₈)-alkoxy, (C₂-C₁₈)-alkoxyalkyl, (C₁-C₁₈)-acyloxy, (C₆-C₁₈)-aryl, (C₇-C₁₉)-aralkyl, (C₃-C₁₈)-heteroaryl, (C₄-C₁₉)-heteroaralkyl, (C₁-C₈)-alkyl-(C₆-C₁₈)-aryl, (C₁-C₈)-alkyl-(C₃-C₁₉)-heteroalkyl, (C₃-C₈)-cycloalkyl, (C₁-C₈)-alkyl-(C₃-C₈)-cycloalkyl, (C₃-C₈)-cycloalkyl-(C₁-C₈)-alkyl,
or R³ and R⁴ are bonded *via* a (C₃-C₅)-bridge which may contain one or more double bonds and/or may be mono- or poly-substituted by linear or branched (C₁-C₈)-alkyl, (C₁-C₈)-acyl, (C₁-C₈)-alkoxy, (C₂-C₈)-alkoxyalkyl and/or may contain hetero atoms such as N, O, P, S in the ring,
R⁵ represents (C₁-C₁₈)-alkyl, (C₆-C₁₈)-aryl, (C₃-C₁₈)-heteroaryl, (C₁-C₈)-alkyl-(C₆-C₁₈)-aryl, (C₁-C₈)-alkyl-(C₃-C₁₉)-heteroalkyl, (C₃-C₈)-cycloalkyl, (C₁-C₈)-alkyl-(C₃-C₈)-cycloalkyl, it being possible for the R⁵ radicals at the same phosphorus atom and/or at the two phosphorus atoms to be different,
R⁶, R⁷ each independently of the other represents H, (C₁-C₁₈)-alkyl, (C₁-C₁₈)-alkoxy, (C₂-C₁₈)-alkoxyalkyl, (C₁-C₁₈)-acyl, (C₆-C₁₈)-aryl, (C₇-C₁₉)-aralkyl, (C₃-C₁₈)-heteroaryl, (C₄-C₁₉)-heteroaralkyl, (C₁-C₈)-alkyl-(C₆-C₁₈)-aryl, (C₁-C₈)-alkyl-(C₃-C₁₉)-heteroalkyl, (C₃-C₈)-cycloalkyl, (C₁-C₈)-alkyl- (C₃-C₈)-cycloalkyl, (C₃-C₈)-cycloalkyl-(C₁-C₈)-alkyl,
or R⁶ and R⁷ are bonded *via* a (C₃-C₇)-carbocyclic ring which may be mono- or poly-substituted by linear or branched (C₁-C₈)-alkyl, (C₁-C₈)-acyl, (C₁-C₈)-alkoxy, (C₂-C₈)-alkoxyalkyl and/or may contain hetero atoms such as N, O, P, S in the ring,
R⁸ represents H or a radical B-X-Z, wherein B is a radical of the group CR⁹₂, NR⁹, O, S, SiR⁹₂, X is a spacer such as, for example, 1,4'-biphenyl, 1-, 2-ethylene, 1-, 3-propylene, PEG-(2-10), and Z is a radical bonded to a polymer *via* a functional group, such as, for example, the O, NH, COO, CONH, ethenyl, NHCONH, OCONH or NHCOO,
or the radicals R⁸ of the two cyclopentadienyl rings are bonded together *via* an α,ω-(C₂-C₄)-alkylene bridge,
R⁹ represents H, (C₁-C₁₈)-alkyl.

2. Compounds according to claim 1,
**characterised in that**
R¹, R² each independently of the other represents H, NR⁶R⁷, (C₁-C₈)-alkyl, (C₁-C₈)-acyloxy, (C₆-C₈)-aryl, (C₃-C₈)-cycloalkyl,
or R¹ and R² are bonded *via* a (C₃-C₇)-carbocyclic ring,
R³, R⁴ each independently of the other represents (C₁-C₈)-alkyl, (C₆-C₁₈)-aryl, (C₃-C₈)-cycloalkyl,
or R³ and R⁴ are bonded *via* a (C₃-C₅)-bridge which may contain one or more double bonds,
R⁵ represents (C₆-C₁₈)-aryl, (C₃-C₈)-cycloalkyl,
R⁶, R⁷ each independently of the other represents (C₁-C₁₈)-alkyl, (C₁-C₁₈)-acyl, (C₆-C₁₈)-aryl, (C₃-C₈)-cycloalkyl,
or R⁶ and R⁷ are bonded *via* a (C₃-C₇)-carbocyclic ring,
R⁸ represents H.

3. Enantiomerically enriched complexes of the general formula (II) and their salts 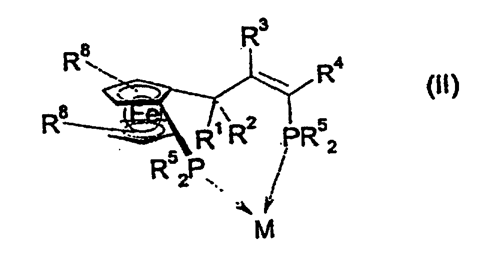 wherein
R¹, R² each independently of the other represents R⁸, NR⁶R⁷, SR⁶, (C₁-C₁₈)-alkyl, (C₁-C₁₈)-alkoxy, (C₂-C₁₈)-alkoxyalkyl, (C₁-C₁₈)-acyloxy, (C₆-C₁₈)-aryl, (C₇-C₁₉)-aralkyl, (C₃-C₁₈) -heteroaryl, (C₄-C₁₉)-heteroaralkyl, (C₁-C₈)-alkyl-(C₆-C₁₈)-aryl, (C₁-C₈)-alkyl- (C₃-C₁₉)-heteroalkyl, (C₃-C₈)-cycloalkyl, (C₁-C₈)-alkyl-(C₃-C₈)-cycloalkyl, (C₃-C₈)-cycloalkyl- (C₁-C₈)-alkyl,
or R¹ and R² are bonded *via* a (C₃-C₇)-carbocyclic ring which may be mono- or poly-substituted by linear or branched (C₁-C₈)-alkyl, (C₁-C₈)-acyl, (C₁-C₈)-alkoxy, (C₂-C₈)-alkoxyalkyl and/or may contain hetero atoms such as N, O, P, S in the ring,
R³, R⁴ each independently of the other represents H, (C₁-C₁₈)-alkyl, (C₁-C₁₈)-alkoxy, (C₂-C₁₈)-alkoxyalkyl, (C₁-C₁₈)-acyloxy, (C₆-C₁₈)-aryl, (C₇-C₁₉)-aralkyl, (C₃-C₁₈)-heteroaryl, (C₄-C₁₉)-heteroaralkyl, (C₁-C₈)-alkyl-(C₆-C₁₈)-aryl, (C₁-C₈)-alkyl-(C₃-C₁₉)-heteroalkyl, (C₃-C₈)-cycloalkyl, (C₁-C₈)-alkyl-(C₃-C₈)-cycloalkyl, (C₃-C₈)-cycloalkyl-(C₁-C₈)-alkyl,
or R³ and R⁴ are bonded *via* a (C₃-C₅)-bridge which may contain one or more double bonds and/or may be mono- or poly-substituted by linear or branched (C₁-C₈)-alkyl, (C₁-C₈)-acyl, (C₁-C₈)-alkoxy, (C₂-C₈)-alkoxyalkyl and/or may contain hetero atoms such as N, O, P, S in the ring,
R⁵ represents (C₁-C₁₈)-alkyl, (C₆-C₁₈)-aryl, (C₃-C₁₈)-heteroaryl, (C₁-C₈)-alkyl- (C₆-C₁₈)-aryl, (C₁-C₈)-alkyl-(C₃-C₁₉)-heteroalkyl, (C₃-C₈)-cycloalkyl, (C₁-C₈)-alkyl-(C₃-C₈)-cycloalkyl, it being possible for the R⁵ radicals at the same phosphorus atom and/or at the two phosphorus atoms to be different,
R⁶, R⁷ each independently of the other represents H, (C₁-C₁₈)-alkyl, (C₁-C₁₈)-alkoxy, (C₂-C₁₈)-alkoxyalkyl, (C₁-C₁₈)-acyl, (C₆-C₁₈)-aryl, (C₇-C₁₉)-aralkyl, (C₃-C₁₈)-heteroaryl, (C₄-C₁₉)-heteroaralkyl, (C₁-C₈)-alkyl-(C₆-C₁₈)-aryl, (C₁-C₈)-alkyl- (C₃-C₁₉)-heteroalkyl, (C₃-C₈)-cycloalkyl, (C₁-C₈)-alkyl-(C₃-C₈)-cycloalkyl, (C₃-C₈)-cycloalkyl-(C₁-C₈)-alkyl,
or R⁶ and R⁷ are bonded *via* a (C₃-C₇)-carbocyclic ring which may be mono- or poly-substituted by linear or branched (C₁-C₈)-alkyl, (C₁-C₈)-acyl, (C₁-C₈)-alkoxy, (C₂-C₈)-alkoxyalkyl and/or may contain hetero atoms such as N, O, P, S in the ring,
R⁸ represents H or a radical B-X-Z, wherein B is a radical of the group CR⁹₂, NR⁹, O, S, SiR⁹₂, X is a spacer such as, for example, 1,4'-biphenyl, 1-, 2-ethylene, 1-, 3-propylene, PEG-(2-10), and Z is a radical bonded to a polymer *via* a functional group, such as, for example, the O, NH, COO, CONH, ethenyl, NHCONH, OCONH or NHCOO,
or the radicals R⁸ of the two cyclopentadienyl rings are bonded together via an α,ω-(C₂-C₄)-alkylene bridge,
R⁹ represents H, (C₁-C₁₈)-alkyl,
and M is a metal atom or a metal ion of sub-group 7 or 8, such as, for example, Co, Ni, Rh, Ru, Ir, Pd, Re or Pt.

4. Compounds according to claim 3,
**characterised in that**
R¹, R² each independently of the other represents H, NR⁶R⁷, (C₁-C₈)-alkyl, (C₁-C₈)-acyloxy, (C₆-C₈)-aryl, (C₃-C₈)-cycloalkyl,
or R¹ and R² are bonded *via* a (C₃-C₇)-carbocyclic ring,
R³, R⁴ each independently of the other represents (C₁-C₈)-alkyl, (C₆-C₁₈)-aryl, (C₃-C₈)-cycloalkyl,
or R³ and R⁴ are bonded *via* a (C₃-C₅)-bridge which may contain one or more double bonds,
R⁵ represents (C₆-C₁₈)-aryl, (C₃-C₈)-cycloalkyl,
R⁶, R⁷ each independently of the other represents (C₁-C₁₈)-alkyl, (C₁-C₁₈)-acyl, (C₆-C₁₈)-aryl, (C₃-C₈)-cycloalkyl,
or R⁶ and R⁷ are bonded *via* a (C₃-C₇)-carbocyclic ring,
R⁸ represents H,
and M is a metal atom or a metal ion of sub-group 8, such as, for example, Rh, Ru, Pd.

5. Process for the preparation of ligands according to claim 1 and/or 2,
**characterised in that**
compounds of the general formula (III) 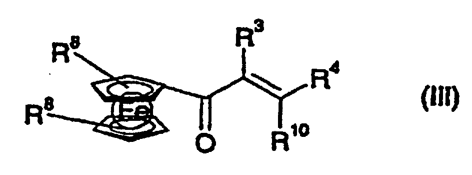 wherein R³, R⁴ and R⁸ may have the meaning given above and R¹⁰ represents Hal,
are reacted enantioselectively to form compounds of the general formula (IV) 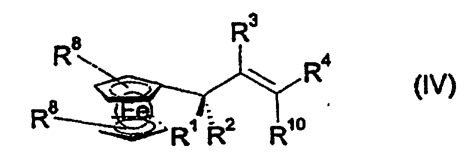 wherein R¹, R² are H or OH, wherein R¹ and R² may not be the same, R³, R⁴ and R⁸ may have the meaning given above, and R¹⁰ represents Hal.

6. Process according to claim 5,
**characterised in that**
compounds of the general formula (IV), wherein R¹, R² are H or OH, wherein R¹ and R² may not be the same, R³, R⁴ and R⁸ may have the meaning given above, and R¹⁰ represents Hal, are converted into compounds of the general formula (V) 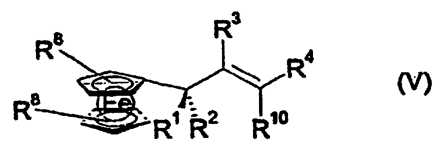 wherein R¹, R² are H or N(C₁-C₈)-alkyl₂, wherein R¹ and R² may not be the same, R³, R⁴ and R⁸ may have the meaning given above, and R¹⁰ represents Hal.

7. Process according to claim 6,
**characterised in that**
compounds of the general formula (V), wherein R¹, R² are H or N(C₁-C₈)-alkyl₂, wherein R¹ and R² may not be the same, R³, R⁴ and R⁸ may have the meaning given above, and R¹⁰ represents Hal, are converted into compounds of the general formula (VI) 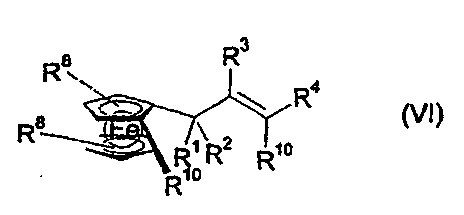 wherein R¹, R² are H or N(C₁-C₈)-alkyl₂, wherein R¹ and R² may not be the same, R³, R⁴ and R⁸ may have the meaning given above, and R¹⁰ represents Li.

8. Process according to claim 7,
**characterised in that**
compounds of the general formula (VI), wherein R¹, R² are H or N(C₁-C₈)-alkyl₂, wherein R¹ and R² may not be the same, R³, R⁴ and R⁸ may have the meaning given above, and R¹⁰ represents Li, are converted into compounds of the general formula (I) 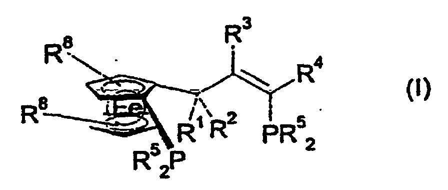 wherein R¹ to R⁹ may have the meaning given in claim 1.

9. Use of ligands according to claim 1 in catalysts for homogeneous enantioselective hydrogenation.

10. Use of complexes according to claim 3 for homogeneous enantioselective hydrogenation.

## Revendications

1. Ligands enrichis en énantiomères de formule générale (I) et leurs sels, où 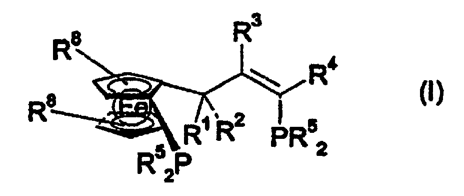 R¹, R² représentent indépendamment l'un de l'autre R⁸, NR⁶, SR⁶, alkyl en C₁ à C₁₈, alcoxy en C₁ à C₁₈, alcoxyalkyl en C₂ à C₁₈, acyloxy en C₁ à C₁₈, aryle en C₆ à C₁₈, aralkyl en C₇ à C₁₉, hétéroaryle en C₃ à C₁₈, hétéroalkyl en C₄ à C₁₉, alkyl en C₁ à C₈-aryle en C₆ à C₁₈, Alkyl en C₁ à C₈-hétéroalkyl en C₃ à C₁₉, cycloalkyl en C₃ à C₈, alkyl en C₁ à C₈-cycloalkyl en C₃ à C₈, cycloalkyl en C₃ à C₈-alkyl en C₁ à C₈,
ou R¹ et R² sont reliés par un carbocycle en C₃ à C₇ qui peut être mono- ou poly-substitué par des radicaux alkyl en C₁ à C₈, acyle en C₁ à C₈, alcoxy en C₁ à C₈, alcoxy alkyl en C₂ à C₈ linéaires ou ramifiés, ou contenir dans son noyau des hétéroatomes tels que N, O, P, S,
R³, R⁴ représentent indépendamment l'un de l'autre H, alkyl en C₁ à C₁₈, alcoxy en C₁ à C₁₈, alcoxyalkyl en C₂ à C₁₈, acyloxy en C₁ à C₁₈, aryle en C₆ à C₁₈, aralkyl en C₇ à C₁₉, hétéroaryle en C₃ à C₁₈, hétéroaralkyl en C₄ à C₁₉, alkyl en C₁ à C₈-aryle en C₆ à C₁₈, alkyl en C₁ à C₈-hétéroalkyl en C₃ à C₁₉, cycloalkyl en C₃ à C₈, alkyl en C₁ à C₈-cycloalkyl en C₃ à C₈, cycloalkyl en C₃ à C₈-alkyl en C₁ à C₈,
ou R³ et R⁴ sont reliés par un pont en C₃ à C₅ qui peut contenir une ou plusieurs doubles liaisons et/ou être mono- ou polysubstitué par des radicaux alkyl en C₁ à C₈, acyle en C₁ à C₈, alcoxy en C₁ à C₈, alcoxyalkyl en C₂ à C₈ linéaires ou ramifiés et/ou contenir dans son noyau des hétéroatomes tels que N, O, P, S,
R⁵ représente
alkyl en C₁ à C₁₈, aryle en C₆ à C₁₈,
hétéroaryle en C₃ à C₁₈, alkyl en C₁ à C₈-aryle en C₆ à C₁₈, alkyl en C₁ à C₈-hétéroalkyl en C₃ à C₁₉, cycloalkyl en C₃ à C₈,
alkyl en C₁ à C₈-cycloalkyl en C₃ à C₈, où les radicaux R⁵ peuvent être différents sur le même atome de phosphore et/ou sur les deux atomes de phosphore,
R⁶, R⁷ représentent indépendamment l'un de l'autre H, alkyl en C₁ à C₁₈, alcoxy en C₁ à C₁₈, alcoxyalkyl en C₂ à C₁₈, acyle en C₁ à C₁₈, aryle en C₆ à C₁₈, aralkyl en C₇ à C₁₉, hétéroaryle en C₃ à C₁₈, hétéroaralkyl en C₄ à C₁₉, alkyl en C₁ à C₈-aryle en C₆ à C₁₈, alkyl en C₁ à C₈- hétéroalkyl en C₃ à C₁₉, cycloalkyl en C₃ à C₈, alkyl en C₁ à C₈-cycloalkyl en C₃ à C₈, cycloalkyl en C₃ à C₈-alkyl en C₁ à C₈,
ou R⁶ et R⁷ sont reliés par l'intermédiaire d'un carbocycle en C₃ à C₇, qui peut être mono- ou polysubstitué par des radicaux alkyl en C₁ à C₈, acyle en C₁ à C₈, alcoxy en C₁ à C₈, alcoxy alkyl en C₂ à C₈ linéaires ou ramifiés et/ou contenir dans leur noyau des hétéroatomes tels que N, O, P, S,
R⁸ représente H ou un radical B-X-Z, où B représente un radical du groupe CR⁹₂, NR⁹, O, S, SiR⁹₂, X est un groupe d'espacement tel que par exemple le 1,4'-biphényle, le 1- ou le 2-éthylène, le 1- ou le 3-propylène, le PEG-(2-10) et Z représente un radical lié à un polymère par l'intermédiaire d'un groupe fonctionnel, comme par exemple O, NH, COO, CONH, éthényle, NHCONH, OCONH ou NHCOO,
ou les radicaux R⁸ des deux noyaux cyclopentadiényle sont reliés entre eux par l'intermédiaire d'un pont α,ω-(alkylène en C₂ à C₄),
R⁹ représente H, un alkyl en C₁ à C₁₈.

2. Composés selon la revendication 1,
**caractérisés en ce que**
R¹, R² représentent indépendamment l'un de l'autre H, NR⁶R⁷, un alkyl en C₁ à C₈, un acyloxy en C₁ à C₈, un aryle en C₆ à C₈, un cycloalkyl en C₃ à C₈ ;
ou R¹ et R² sont reliés par l'intermédiaire d'un carbocycle en C₃ à C₇,
R³, R⁴ représentent indépendamment l'un de l'autre un alkyl en C₁ à C₈, un aryle en C₆ à C₁₈, un cycloalkyl en C₃ à C₈,
ou R³ et R⁴ sont reliés par l'intermédiaire d'un pont en C₃ à C₅ qui peut contenir une ou plusieurs doubles liaisons,
R⁵ représente un aryle en C₆ à C₁₈, un cycloalkyl en C₃ à C₈,
R⁶, R⁷ représentent indépendamment l'un de l'autre un alkyl en C₁ à C₁₈, un acyle en C₁ à C₁₈, un aryle en C₆ à C₁₈, un cycloalkyl en C₃ à C₈,
ou R⁶ et R⁷ sont reliés par l'intermédiaire d'un carbocycle en C₃ à C₇,
R⁸ représente H.

3. Complexes enrichis en énantiomères, de formule générale (II), et leurs sels 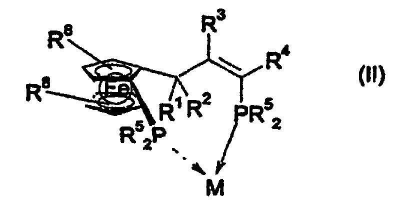 où R¹, R² représentent indépendamment l'un de l'autre R⁸, NR⁶, SR⁶, un alkyl en C₁ à C₁₈, alcoxy en C₁ à C₁₈, alcoxyalkyl en C₂ à C₁₈, acyloxy en C₁ à C₁₈, aryle en C₆ à C₁₈, aralkyl en C₇ à C₁₉, hétéroaryle en C₃ à C₁₈, hétéroaralkyl en C₄ à C₁₉, alkyl en C₁ à C₈-aryle en C₆ à C₁₈,
Alkyl en C₁ à C₈-hétéroalkyl en C₃ à C₁₉, cycloalkyl en C₃ à C₈, alkyl en C₁ à C₈-cycloalkyl en C₃ à C₈, cycloalkyl en C₃ à C₈-alkyl en C₁ à C₈,
ou R¹ et R² sont reliés par un carbocycle en C₃ à C₇ qui peut être mono- ou poly-substitué par des radicaux alkyl en C₁ à C₈, acyle en C₁ à C₈, alcoxy en C₁ à C₈, alcoxy alkyl en C₂ à C₈ linéaires ou ramifiés, ou contenir dans son noyau des hétéroatomes tels que N, O, P, S,
R³, R⁴ représentent indépendamment l'un de l'autre H, alkyl en C₁ à C₁₈, alcoxy en C₁ à C₁₈, alcoxyalkyl en C₂ à C₁₈, acyloxy en C₁ à C₁₈, aryle en C₆ à C₁₈, aralkyl en C₇ à C₁₉, hétéroaryle en C₃ à C₁₈, hétéroaralkyl en C₄ à C₁₉, alkyl en C₁ à C₈-aryle en C₆ à C₁₈,
alkyl en C₁ à C₈-hétéroalkyl en C₃ à C₁₉, cycloalkyl en C₃ à C₈, alkyl en C₁ à C₈-cycloalkyl en C₃ à C₈, cycloalkyl en C₃ à C₈-alkyl en C₁ à C₈,
ou R³ et R⁴ sont reliés par un pont en C₃ à C₅ qui peut contenir une ou plusieurs doubles liaisons et/ou être mono- ou polysubstitué par des radicaux alkyl en C₁ à C₈, acyle en C₁ à C₈, alcoxy en C₁ à C₈, alcoxyalkyl en C₂ à C₈ linéaires ou ramifiés et/ou contenir dans son noyau des hétéroatomes tels que N, O, P, S,
R⁵ représente alkyl en C₁ à C₁₈, aryle en C₆ à C₁₈, hétéroaryle en C₃ à C₁₈, alkyl en C₁ à C₈-aryle en C₆ à C₁₈, alkyl en C₁ à C₈-hétéroalkyl en C₃ à C₁₉, cycloalkyl en C₃ à C₈,
alkyl en C₁ à C₈-cycloalkyl en C₃ à C₈, où les radicaux R⁵ peuvent être différents sur le même atome de phosphore et/ou sur les deux atomes de phosphore,
R⁶, R⁷ représentent indépendamment l'un de l'autre H, alkyl en C₁ à C₁₈, alcoxy en C₁ à C₁₈, alcoxyalkyl en C₂ à C₁₈, acyle en C₁ à C₁₈, aryle en C₆ à C₁₈, aralkyl en C₇ à C₁₉, hétéroaryle en C₃ à C₁₈, hétéroaralkyl en C₄ à C₁₉, alkyl en C₁ à C₈-aryle en C₆ à C₁₈, alkyl en C₁ à C₈- hétéroalkyl en C₃ à C₁₉, cycloalkyl en C₃ à C₈, alkyl en C₁ à C₈-cycloalkyl en C₃ à C₈, cycloalkyl en C₃ à C₈-alkyl en C₁ à C₈,
ou R⁶ et R⁷ sont reliés par l'intermédiaire d'un carbocycle en C₃ à C₇, qui peut être mono- ou polysubstitué par des radicaux alkyl en C₁ à C₈, acyle en C₁ à C₈, alcoxy en C₁ à C₈, alcoxy alkyl en C₂ à C₈ linéaires ou ramifiés et/ou contenir dans son noyau des hétéroatomes tels que N, O, P, S,
R⁸ représente H ou un radical B-X-Z, où B représente un radical du groupe CR⁹₂, NR⁹, O, S, SiR⁹₂, X est un groupe d'espacement tel que par exemple le 1,4'-biphényle, le 1- ou le 2-éthylène, le 1- ou le 3-propylène, le PEG-(2-10) et Z représente un radical lié à un polymère par l'intermédiaire d'un groupe fonctionnel, comme par exemple O, NH, COO, CONH, éthényle, NHCONH, OCONH ou NHCOO,
ou les radicaux R⁸ des deux noyaux cyclopentadiényle sont reliés entre eux par l'intermédiaire d'un pont α,ω-alkylène en C₂ à C₄,
R⁹ représente H, un alkyl en C₁ à C₁₈,
et M représente un atome ou ion métallique du groupe 7 ou 8 de la classification périodique des éléments, comme par exemple Co, Ni, Rh, Ru, Ir, Pd, Re ou Pt.

4. Composés selon la revendication 3,
**caractérisés en ce que**
R¹, R² représentent indépendamment l'un de l'autre H, NR⁶R⁷, un alkyl en C₁ à C₈, un acyloxy en C₁ à C₈, un aryle en C₆ à C₈, un cycloalkyl en C₃ à C₈,
ou R¹ et R² sont liés par l'intermédiaire d'un carbocycle en C₃ à C₇,
R³, R⁴ représentent indépendamment l'un de l'autre un alkyl en C₁ à C₈, un aryle en C₆ à C₁₈, un cycloalkyl en C₃ à C₈,
ou R³ et R⁴ sont reliés par l'intermédiaire d'un pont en C₃ à C₅ qui peut contenir une ou plusieurs doubles liaisons,
R⁵ représente un aryle en C₆ à C₁₈, un cycloalkyl en C₃ à C₈,
R⁶, R⁷ représentent indépendamment l'un de l'autre un alkyl en C₁ à C₁₈, un acyle en C₁ à C₁₈, un aryle en C₆ à C₁₈, un cycloalkyl en C₃ à C₈,
ou R⁶ et R⁷ sont liés par l'intermédiaire d'un carbocycle en C₃ à C₇,
R⁸ représente H,
et M représente un atome ou un ion métallique du huitième sous-groupe de la classification périodique des éléments, comme par exemple Rh, Ru, Pd.

5. Procédé de préparation des ligands selon la revendication 1 et/ou 2,
**caractérisé en ce qu'**
on fait réagir des composés de formule générale III 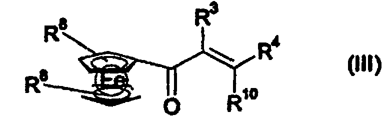 dans laquelle R³, R⁴ et R⁸ peuvent prendre de façon énantiosélective la signification indiquée ci-dessus et R¹⁰ = Hal, pour donner des composés de formule générale (IV) 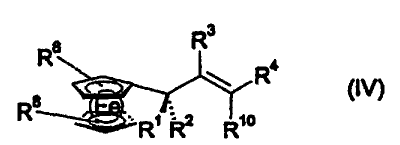 dans laquelle R¹, R² représentent H ou OH, R¹ et R² ne devant pas être identiques, R³, R⁴ et R⁸ pouvant prendre la signification indiquée ci-dessus et R¹⁰ = Hal.

6. Procédé selon la revendication 5,
**caractérisé en ce qu'**
on transforme des composés de formule générale (IV), dans laquelle R¹, R² représentent H ou OH, où R¹, R² ne doivent pas être identiques, R³, R⁴ et R⁸ peuvent prendre la signification indiquée ci-dessus et R¹⁰ = Hal, pour donner des composés de formule générale (V) 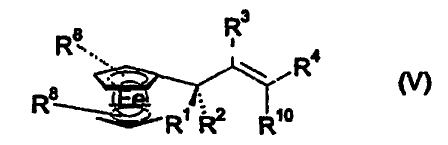 dans laquelle R¹, R² représentent H ou N-(alkyl en C₁ à C₈)₂, où R¹ et R² ne doivent pas être identiques, R³, R⁴ et R⁸ peuvent prendre la signification indiquée ci-dessus, et R¹⁰ = Hal.

7. Procédé selon la revendication 6,
**caractérisé en ce qu'**
on transforme des composés de formule générale (V) dans laquelle R¹, R² représentent H ou N(alkyl en C₁ à C₈)₂, où R¹ et R² ne doivent pas être identiques, R³, R⁴ et R⁸ peuvent prendre la signification indiquée ci-dessus et R¹⁰ = Hal, de façon intéressante pour donner les composés de formule générale (VI) 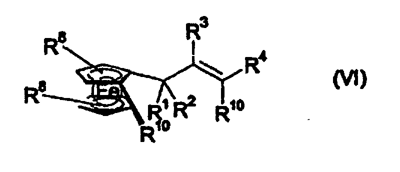 dans laquelle R¹, R², H ou N(alkyl en C₁ à C₈)₂, où R¹ et R² ne doivent pas êtes identiques, R³, R⁴ et R⁸ peuvent prendre la signification indiquée ci-dessus et R¹⁰ = Li.

8. Procédé selon la revendication 7,
**caractérisé en ce qu'**
on transforme des composés de formule générale (VI), dans laquelle R¹, R² représentent H ou N(alkyl en C₁ à C₈)₂, où R¹ et R² ne doivent pas être identiques, R³, R⁴ et R⁸ peuvent prendre la signification indiquée ci-dessus et R¹⁰ = Li, en composés de formule générale (I) 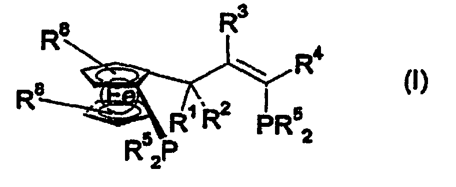 dans laquelle R¹ à R⁹ peuvent prendre les significations indiquées dans la revendication 1.

9. Utilisation des ligands selon la revendication 1 dans des catalyseurs en vue d'une hydrogénation énantiosélective homogène.

10. Utilisation des complexes selon la revendication 3, pour l'hydrogénation énantiosélective homogène.
